(19) Europäisches Patentamt
European Patent Office
Office européen des brevets

(11) **EP 4 765 969 A2**

(12) **EUROPEAN PATENT APPLICATION**

(43) Date of publication:
**24.06.2026 Bulletin 2026/26**

(21) Application number: **26157946.0**

(22) Date of filing: **23.03.2023**

(51) International Patent Classification (IPC):
*H04W 64/00* (2009.01)

(52) Cooperative Patent Classification (CPC):
**G01S 5/14; G01S 13/765; H04W 4/80; H04W 64/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **29.03.2022 CN 202210315062
30.06.2022 CN 202210759159**

(62) Document number(s) of the earlier application(s) in
accordance with Art. 76 EPC:
**23778002.8 / 4 475 570**

(71) Applicant: **Huawei Technologies Co., Ltd.
Shenzhen, Guangdong 518129 (CN)**

(72) Inventors:
• **PENG, Shu**
**Shenzhen, Guangdong, 518129 (CN)**
• **WANG, Kang**
**Shenzhen, Guangdong, 518129 (CN)**

• **HU, Shichang**
**Shenzhen, Guangdong, 518129 (CN)**
• **YU, Qian**
**Shenzhen, Guangdong, 518129 (CN)**

(74) Representative: **Maiwald GmbH
Engineering
Elisenhof
Elisenstrasse 3
80335 München (DE)**

Remarks:
•This application was filed on 11-02-2026 as a
divisional application to the application mentioned
under INID code 62.
•Claims filed after the date of filing of the application /
after the date of receipt of the divisional application
(Rule 68(4) EPC).

(54) **COMMUNICATION METHOD AND APPARATUS, AND SYSTEM**

(57) Embodiments of this application provide a ranging method and apparatus, and a system. The solution is applied to a UWB-based wireless personal area network system, a sensing sensing system, and the like. The method includes: A first device sends ranging control information to a second device through a first channel, where the ranging control information is used to configure a ranging frame; and the first device receives and/or sends the ranging frame through a second channel, where a bandwidth of the second channel is greater than a bandwidth of the first channel. Based on the foregoing solution, the first device and the second device may exchange the ranging control information and a measurement result through the first channel, and perform ranging through the second channel. Because information exchange of the ranging control information and the measurement result is completed through the first channel, and the bandwidth of the first channel is less than the bandwidth of the second channel, power consumption of the device can be reduced.

**Description**

This application claims priority to Chinese Patent Application No. 202210315062.6, filed on March 29, 2022 and entitled "COMMUNICATION METHOD AND APPARATUS, AND SYSTEM", which is incorporated herein by reference in its entirety.

This application claims priority to Chinese Patent Application No. 202210759159.6, filed on June 30, 2022 and entitled "RANGING METHOD AND APPARATUS, AND SYSTEM", which is incorporated herein by reference in its entirety.

**TECHNICAL FIELD**

Embodiments of this application relate to the communication field, and more specifically, to a ranging method and apparatus, and a system.

**BACKGROUND**

Ultra wideband (ultra wideband, UWB), which is a wireless personal area network (wireless personal area network, WPAN) communication technology, uses nanosecond-level pulses as basic signals, and occupies a large bandwidth. In addition, due to the features of a low power density, a high time resolution, a good anti-multipath capability, coexistence with an existing communication system, and the like, the UWB can be used to implement high-precision ranging and positioning, especially in complex multipath environments.

In a current ranging method, a UWB module in a device implements complex functions, resulting in high power consumption of the device.

**SUMMARY**

Embodiments of this application provide a ranging method and apparatus, and a system, to reduce power consumption of a device.

According to a first aspect, a ranging method is provided. The method may be performed by a first device, or may be performed by a chip, a circuit, or a module configured in a first device. This is not limited in this application. The following uses an example in which the first device performs the method for description.

The method may include: The first device sends ranging control information to a second device through a first channel, where the ranging control information is used to configure a ranging frame; the first device receives and/or sends the ranging frame through a second channel, where a bandwidth of the second channel is greater than a bandwidth of the first channel; and the first device receives or sends a measurement result through the first channel, where the measurement result is determined based on the ranging frame.

Based on the foregoing solution, the first device and the second device may exchange the ranging control information through the first channel, and perform ranging through the second channel. Because exchange of the ranging control information is completed through the first channel, and the bandwidth of the first channel is less than the bandwidth of the second channel, power consumption of the device can be reduced.

With reference to the first aspect, in some implementations of the first aspect, the ranging control information includes first information, and the first information indicates whether the ranging frame includes a channel impulse response training sequence CTS.

Based on the foregoing solution, the ranging control information may include a format of the ranging frame, so that a controllee can send or parse the ranging frame based on the format. This makes the ranging method highly feasible.

With reference to the first aspect, in some implementations of the first aspect, the ranging control information includes second information, and the second information indicates delay time between a clock synchronization moment and a first slot in a ranging round.

Based on the foregoing solution, the ranging control information may include the delay time between the clock synchronization moment and the first slot in the ranging round, so that the controllee can learn when to receive/send the ranging frame. This makes the ranging method highly feasible.

With reference to the first aspect, in some implementations of the first aspect, the ranging control information includes third information, the third information indicates the second device to feed back a ranging measurement value, or feed back a ranging measurement value and a positioning result that is of the second device and that is obtained based on the ranging measurement value, and the ranging measurement value includes information obtained based on exchange of the ranging frame.

Based on the foregoing solution, the ranging control information may include an indication indicating whether to feed back the positioning result, so that when feeding back the ranging measurement value, the controllee can further learn whether location-related information needs to be fed back. This helps improve diversity of measurement results and has higher efficiency.

With reference to the first aspect, in some implementations of the first aspect, the information obtained based on exchange of the ranging frame includes a time difference between a receiving moment of the ranging frame and a sending moment of acknowledgment of the ranging frame, or a time difference between a sending moment of the ranging frame and a receiving moment of acknowledgment of the ranging frame.

With reference to the first aspect, in some implementations of the first aspect, the information obtained based on exchange of the ranging frame includes an angle of arrival of the second device relative to the first device.

With reference to the first aspect, in some implementations of the first aspect, the third information indicates the second device to feed back the ranging measurement value and the positioning result, the ranging control information further includes fourth information, and the fourth information indicates that the positioning result is a location of the second device relative to the first device, or a positioning result in an absolute coordinate system.

Based on the foregoing solution, the ranging control information may include an indication indicating a coordinate system type of the positioning result, so that when determining the positioning result, the controllee can learn whether to determine a relative location or an absolute location. This helps improve diversity of measurement results and has higher efficiency.

With reference to the first aspect, in some implementations of the first aspect, the method further includes: The first device receives or sends the measurement result through the first channel, where the measurement result is determined based on the ranging frame.

Based on the foregoing solution, after performing ranging through the second channel, the first device and the second device may further broadcast the measurement result through the first channel. Because broadcasting of the measurement result is completed through the first channel, and the bandwidth of the first channel is less than the bandwidth of the second channel, power consumption of the device can be reduced.

With reference to the first aspect, in some implementations of the first aspect, the measurement result includes at least one of fifth information, sixth information, and seventh information. The fifth information indicates whether the measurement result includes an address of a basepoint device, and the basepoint device is in a communication system in which the first device is included; the sixth information indicates a quantity N of positioning results included in the measurement result, and N is a positive integer; and the seventh information indicates the positioning result.

Based on the foregoing solution, the measurement result may include location information. Specifically, the measurement result may include at least one of the following: an indication indicating whether the measurement result includes the address of the basepoint device, an indication indicating the quantity of positioning results, and the positioning result, so that the controller can learn of the location information. This improves diversity of measurement results and has higher efficiency.

With reference to the first aspect, in some implementations of the first aspect, the measurement result includes at least one of eighth information and ninth information. The eighth information indicates whether the measurement result includes a confidence of reply time, and the reply time is the time difference between the receiving moment of the ranging frame and the sending moment of acknowledgment of the ranging frame; and the ninth information indicates whether the measurement result includes a confidence of round-trip time, and the round-trip time is the time difference between the sending moment of the ranging frame and the receiving moment of acknowledgment of the ranging frame.

Based on the foregoing solution, the eighth information and/or the ninth information are/is carried in the measurement result, so that the confidence of the reply time of the ranging frame and/or the confidence of the round-trip time of the ranging frame can be indicated. This helps improve accuracy of a ranging result.

With reference to the first aspect, in some implementations of the first aspect, the bandwidth of the second channel is 499.2 MHz.

With reference to the first aspect, in some implementations of the first aspect, the second channel is an operating channel of ultra wideband (ultra wideband, UWB).

With reference to the first aspect, in some implementations of the first aspect, the first channel is an operating channel of Bluetooth (Bluetooth), wireless fidelity (wireless fidelity, Wi-Fi), narrowband internet of things (narrowband Internet of things, NB-IoT), or near field communication (near field communication, NFC).

According to a second aspect, a ranging method is provided. The method may be performed by a second device, or may be performed by a chip, a circuit, or a module configured in a second device. This is not limited in this application. The following uses an example in which the second device performs the method for description.

The method includes: The second device receives ranging control information through a first channel, where the ranging control information is used to configure a ranging frame; and the second device sends or receives the ranging frame through a second channel, where a bandwidth of the second channel is greater than a bandwidth of the first channel.

It should be understood that, for beneficial effects of any one of the second aspect to the tenth aspect and the implementations of the second aspect to the tenth aspect, refer to the first aspect and the implementations of the first aspect. Details are not described below.

With reference to the second aspect, in some implementations of the second aspect, the ranging control information includes first information, and the first information indicates whether the ranging frame includes a channel impulse response training sequence CTS.

With reference to the second aspect, in some implementations of the second aspect, the ranging control information includes second information, and the second information indicates delay time between a clock synchronization moment and a first slot in a ranging round.

With reference to the second aspect, in some implementations of the second aspect, the ranging control information includes third information, the third information indicates the second device to feed back a ranging measurement value, or feed back a ranging measurement value and a positioning result that is of the second device and that is obtained based on the ranging measurement value, and the ranging measurement value includes information obtained based on exchange of the ranging frame.

With reference to the second aspect, in some implementations of the second aspect, the information obtained based on exchange of the ranging frame includes a time difference between a receiving moment of the ranging frame and a sending moment of acknowledgment of the ranging frame, or a time difference between a sending moment of the ranging frame and a receiving moment of acknowledgment of the ranging frame.

With reference to the second aspect, in some implementations of the second aspect, the information obtained based on exchange of the ranging frame includes an angle of arrival of the second device relative to the first device.

With reference to the second aspect, in some implementations of the second aspect, the third information indicates the second device to feed back the ranging measurement value and the positioning result, the ranging control information further includes fourth information, and the fourth information indicates that the positioning result is a location of the second device relative to the first device, or a positioning result in an absolute coordinate system.

With reference to the second aspect, in some implementations of the second aspect, the method further includes: The second device sends or receives a measurement result through the first channel, where the measurement result is determined based on the ranging frame.

With reference to the second aspect, in some implementations of the second aspect, the measurement result includes at least one of fifth information, sixth information, and seventh information. The fifth information indicates whether the measurement result includes an address of a basepoint device, and the basepoint device is in a communication system in which the first device is included; the sixth information indicates a quantity N of positioning results included in the measurement result, and N is a positive integer; and the seventh information indicates the positioning result.

With reference to the second aspect, in some implementations of the second aspect, the measurement result includes at least one of eighth information and ninth information. The eighth information indicates whether the measurement result includes a confidence of reply time, and the reply time is the time difference between the receiving moment of the ranging frame and the sending moment of acknowledgment of the ranging frame. The ninth information indicates whether the measurement result includes a confidence of round-trip time, and the round-trip time is the time difference between the sending moment of the ranging frame and the receiving moment of acknowledgment of the ranging frame.

With reference to the second aspect, in some implementations of the second aspect, the bandwidth of the second channel is 499.2 MHz.

With reference to the second aspect, in some implementations of the second aspect, the second channel is an operating channel of UWB.

With reference to the second aspect, in some implementations of the second aspect, the first channel is an operating channel of Bluetooth, Wi-Fi, NB-IoT, or NFC.

According to a third aspect, a ranging apparatus is provided. The communication apparatus has functions of implementing the method according to the first aspect or any one of the possible implementations of the first aspect. The functions may be implemented by hardware, or may be implemented by hardware executing corresponding software.

The apparatus includes: a first transceiver, configured to send ranging control information to a second device through a first channel, where the ranging control information is used to configure a ranging frame; and a second transceiver, configured to receive or send the ranging frame through a second channel, where a bandwidth of the second channel is greater than a bandwidth of the first channel.

With reference to the third aspect, in some implementations of the third aspect, the ranging control information includes first information, and the first information indicates whether the ranging frame includes a channel impulse response training sequence CTS.

With reference to the third aspect, in some implementations of the third aspect, the ranging control information includes second information, and the second information indicates delay time between a clock synchronization moment and a first slot in a ranging round.

With reference to the third aspect, in some implementations of the third aspect, the ranging control information includes third information, the third information indicates the second device to feed back a ranging measurement value, or feed back a ranging measurement value and a positioning result that is of the second device and that is obtained based on the ranging measurement value, and the ranging measurement value includes information obtained based on exchange of the ranging frame.

With reference to the third aspect, in some implementations of the third aspect, the information obtained based on exchange of the ranging frame includes a time difference between a receiving moment of the ranging frame and a sending moment of acknowledgment of the ranging frame, or a time difference between a sending moment of the ranging frame and a receiving moment of acknowledgment of the ranging frame.

With reference to the third aspect, in some implementations of the third aspect, the information obtained based on exchange of the ranging frame includes an angle of arrival of the second device relative to the first device.

With reference to the third aspect, in some implementations of the third aspect, the third information indicates the second device to feed back the ranging measurement value and the positioning result, the ranging control information further includes fourth information, and the fourth information indicates that the positioning result is a location of the second device relative to the first device, or a positioning result in an absolute coordinate system.

With reference to the third aspect, in some implementations of the third aspect, the first transceiver is further configured to receive or send a measurement result through the first channel, and the measurement result is determined based on the ranging frame.

With reference to the third aspect, in some implementations of the third aspect, the measurement result includes at least one of fifth information, sixth information, and seventh information. The fifth information indicates whether the measurement result includes an address of a basepoint device, and the basepoint device is in a communication system in which the first device is included; the sixth information indicates a quantity N of positioning results included in the measurement result, and N is a positive integer; and the seventh information indicates the positioning result.

With reference to the third aspect, in some implementations of the third aspect, the measurement result includes at least one of eighth information and ninth information. The eighth information indicates whether the measurement result includes a confidence of reply time, and the reply time is the time difference between the receiving moment of the ranging frame and the sending moment of acknowledgment of the ranging frame; and the ninth information indicates whether the measurement result includes a confidence of round-trip time, and the round-trip time is the time difference between the sending moment of the ranging frame and the receiving moment of acknowledgment of the ranging frame.

With reference to the third aspect, in some implementations of the third aspect, the bandwidth of the second channel is 499.2 MHz.

With reference to the third aspect, in some implementations of the third aspect, the second channel is an operating channel of UWB.

With reference to the third aspect, in some implementations of the third aspect, the first channel is an operating channel of Bluetooth, Wi-Fi, NB-IoT, or NFC.

According to a fourth aspect, a ranging apparatus is provided. The communication apparatus has functions of implementing the method according to the second aspect or any one of the possible implementations of the second aspect. The functions may be implemented by hardware, or may be implemented by hardware executing corresponding software.

The apparatus includes: a third transceiver, configured to receive ranging control information through a first channel, where the ranging control information is used to configure a ranging frame; and a fourth transceiver, configured to send or receive the ranging frame through a second channel, where a bandwidth of the second channel is greater than a bandwidth of the first channel.

With reference to the fourth aspect, in some implementations of the fourth aspect, the ranging control information includes first information, and the first information indicates whether the ranging frame includes a channel impulse response training sequence CTS.

With reference to the fourth aspect, in some implementations of the fourth aspect, the ranging control information includes second information, and the second information indicates delay time between a clock synchronization moment and a first slot in a ranging round.

With reference to the fourth aspect, in some implementations of the fourth aspect, the ranging control information includes third information, the third information indicates the second device to feed back a ranging measurement value, or feed back a ranging measurement value and a positioning result that is of the second device and that is obtained based on the ranging measurement value, and the ranging measurement value includes information obtained based on exchange of the ranging frame.

With reference to the fourth aspect, in some implementations of the fourth aspect, the information obtained based on exchange of the ranging frame includes a time difference between a receiving moment of the ranging frame and a sending moment of acknowledgment of the ranging frame, or a time difference between a sending moment of the ranging frame and a receiving moment of acknowledgment of the ranging frame.

With reference to the fourth aspect, in some implementations of the fourth aspect, the information obtained based on exchange of the ranging frame includes an angle of arrival of the second device relative to the first device.

With reference to the fourth aspect, in some implementations of the fourth aspect, the third information indicates the second device to feed back the ranging measurement value and the positioning result, the ranging control information further includes fourth information, and the fourth information indicates that the positioning result is a location of the second device relative to the first device, or a positioning result in an absolute coordinate system.

With reference to the fourth aspect, in some implementations of the fourth aspect, the third transceiver is further configured to send or receive a measurement result through the first channel, and the measurement result is determined based on the ranging frame.

With reference to the fourth aspect, in some implementations of the fourth aspect, the measurement result includes at least one of fifth information, sixth information, and seventh information. The fifth information indicates whether the measurement result includes an address of a basepoint device, and the basepoint device is in a communication system in which the first device is included; the sixth information indicates a quantity N of positioning results included in the measurement result, and N is a positive integer; and the seventh information indicates the positioning result.

With reference to the fourth aspect, in some implementations of the fourth aspect, the measurement result includes at least one of eighth information and ninth information. The eighth information indicates whether the measurement result includes a confidence of reply time, and the reply time is the time difference between the receiving moment of the ranging frame and the sending moment of acknowledgment of the ranging frame. The ninth information indicates whether the measurement result includes a confidence of round-trip time, and the round-trip time is the time difference between the sending moment of the ranging frame and the receiving moment of acknowledgment of the ranging frame.

With reference to the fourth aspect, in some implementations of the fourth aspect, the bandwidth of the second channel is 499.2 MHz.

With reference to the fourth aspect, in some implementations of the fourth aspect, the second channel is an operating channel of UWB.

With reference to the fourth aspect, in some implementations of the fourth aspect, the first channel is an operating channel of Bluetooth, Wi-Fi, NB-IoT, or NFC.

According to a fifth aspect, a communication apparatus is provided. The communication apparatus has functions of implementing the method according to the first aspect, the second aspect, or any one of the possible implementations of these aspects. The functions may be implemented by hardware, or may be implemented by hardware executing corresponding software. The hardware or the software includes one or more units corresponding to the functions.

According to a sixth aspect, a communication apparatus is provided, including a processor and a memory. Optionally, the apparatus may further include a transceiver. The memory is configured to store a computer program, and the processor is configured to: invoke and run the computer program stored in the memory, and control the transceiver to receive/send a signal, to enable the communication apparatus to perform the method according to first aspect, the second aspect, or any one of the possible implementations of these aspects.

According to a seventh aspect, a communication apparatus is provided, including a processor and a communication interface. The communication interface is configured to: receive data and/or information, and transmit the received data and/or information to the processor. The processor processes the data and/or information. In addition, the communication interface is further configured to output data and/or information that are/is obtained through processing by the processor, so that the method according to the first aspect, the second aspect, or any one of the possible implementations of these aspects is performed.

According to an eighth aspect, a computer-readable storage medium is provided. The computer-readable storage medium stores computer instructions. When the computer instructions are run on a computer, the method according to the first aspect, the second aspect, or any one of the possible implementations of these aspects is performed.

According to a ninth aspect, a computer program product is provided. The computer program product includes computer program code. When the computer program code is run on a computer, the method according to the first aspect, the second aspect, or any one of the possible implementations of these aspects is performed.

According to a tenth aspect, a wireless communication system is provided, including the first device according to the first aspect and/or the second device according to the second aspect.

## BRIEF DESCRIPTION OF DRAWINGS

FIG. 1 is a diagram of two application scenarios according to this application;
FIG. 2 is a diagram of an architecture of a range positioning system according to an embodiment of this application;
FIG. 3 is a flowchart of a ranging method;
FIG. 4 is a diagram of a ranging method according to an embodiment of this application;
FIG. 5 is a diagram of a format of a first information element according to an embodiment of this application;
FIG. 6 shows a relationship between ranging block duration, ranging round duration, and ranging slot duration;
FIG. 7 is a diagram of a format of a second information element according to an embodiment of this application;
FIG. 8 is a diagram of a format of a third information element according to an embodiment of this application;
FIG. 9 is a diagram of a format of a fourth information element according to an embodiment of this application;

FIG. 10 is a diagram of a format of a fifth information element according to an embodiment of this application;

FIG. 11 is a block diagram of a communication apparatus according to an embodiment of this application; and

FIG. 12 is a block diagram of a communication device according to an embodiment of this application.

## DESCRIPTION OF EMBODIMENTS

The following describes technical solutions of this application with reference to accompanying drawings.

Embodiments of this application may be applied to an ultra-wideband (ultra wideband, UWB) technology-based wireless personal area network (wireless personal area network, WPAN). Currently, standards used for the WPAN are the institute of electrical and electronics engineers (institute of electrical and electronics engineers, IEEE) 802.15 series. The WPAN may be used for communication between digital auxiliary devices in a small range, such as telephones, computers, and auxiliary devices, and operates within a range of 10 m. Technologies supporting the wireless personal area network include Bluetooth (Bluetooth), ZigBee (ZigBee), ultra wideband, IrDA infrared connection technology (infrared), HomeRF, and the like. A person skilled in the art easily understands that, various aspects in this application may be extended to another network using various standards or protocols, for example, a wireless local area network (wireless local area network, WLAN), a high performance radio LAN (high performance radio LAN, HIPERLAN), a wide area network (WAN), or another network that is known or developed in the future. From the perspective of network composition, the WPAN is located at a bottom layer of an entire network architecture and is used for a wireless connection between devices in a small range, that is, a point-to-point short-range connection. The WPAN may be considered as a short-range wireless communication network. Based on different application scenarios, WPANs are further classified into a high rate (high rate, HR)-WPAN and a low rate (low rate)-WPAN. The HR-WPAN may be used to support various high-rate multimedia applications, including high-quality sound image delivery, multi-megabyte music and image document transmission, and the like. The LR-WPAN may be used for common services in daily life.

In the WPAN, devices may be classified into a full-function device (full-function device, FFD) and a reduced-function device (reduced-function device, RFD) based on communication capabilities of the devices. FFD devices can communicate with each other, and the FFD device and the RFD device can communicate with each other. The RFD devices cannot directly communicate with each other, and can only communicate with the FFD devices, or forward data externally through an FFD device. The FFD device associated with the RFD is referred to as a coordinator (coordinator) of the RFD. The RFD device is mainly used for a simple control application, such as a light switch and a passive infrared sensor. A small amount of data is transmitted, and a small quantity of transmission resources and communication resources are occupied. Therefore, costs of the RFD device are low. The coordinator may also be referred to as a personal area network (personal area network, PAN) coordinator, a central control node, or the like. The PAN coordinator is a main control node of an entire network, and each ad hoc network can have only one PAN coordinator which has functions of member identity management, link information management, and packet forwarding.

Optionally, the device in embodiments of this application may be a device supporting a plurality of WPAN standards, such as 802.15.4a, 802.15.4z, 802.15.4ab, and a currently discussed version or a later version.

In embodiments of this application, the device may be a communication server, a router, a switch, a bridge, a computer, a mobile phone, a home smart device, a vehicle-mounted communication device, or the like.

In embodiments of this application, the device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of the method provided in embodiments of this application is not specially limited in embodiments of this application, provided that a program that records code of the method provided in embodiments of this application can be run to perform communication according to the method provided in embodiments of this application. For example, the method provided in embodiments of this application may be performed by the FFD or the RFD, or a functional module that can invoke and execute the program in the FFD or the RFD.

In addition, aspects or features of this application may be implemented as a method, an apparatus, or a product that uses standard programming and/or engineering technologies. The term "product" used in this application covers a computer program that can be accessed from any computer-readable component, carrier or medium. For example, the computer-readable medium may include but is not limited to: a magnetic storage component (for example, a hard disk, a floppy disk or a magnetic tape), an optical disc (for example, a compact disc (compact disc, CD), or a digital versatile disc (digital versatile disc, DVD)), a smart card and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, include and/or carry instructions and/or data.

Alternatively, embodiments of this application may be applied to a wireless local area network system, for example, an internet of things (internet of things, IoT) or a vehicle-to-everything (Vehicle to X, V2X) network. Certainly, embodiments of this application may be further applied to other possible communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) communication system, and a future 6th generation (6th generation, 6G) communication system.

The foregoing communication systems applicable to this application are merely examples for descriptions, and the communication systems applicable to this application are not limited thereto. This is uniformly described herein, and details are not described below again.

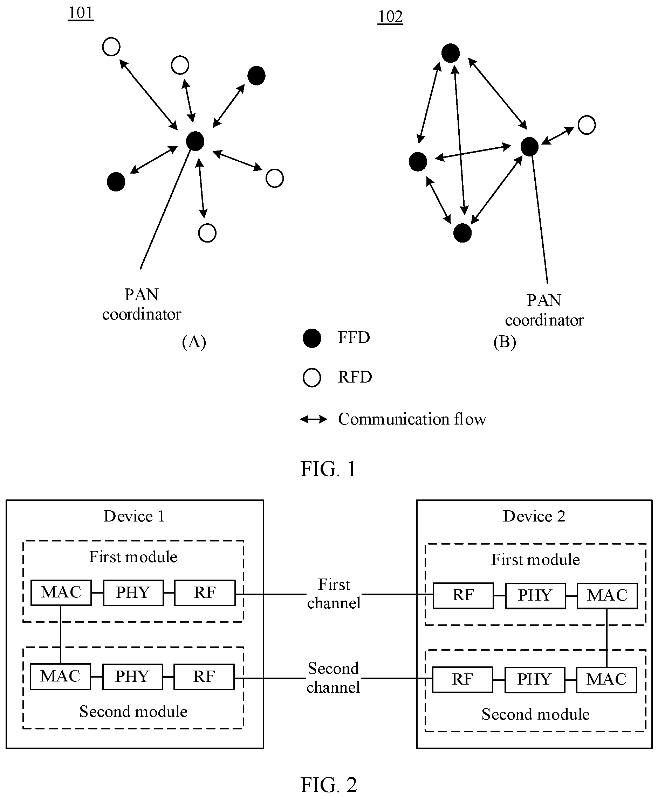

FIG. 1 is a diagram of two application scenarios according to this application. In a system 101 shown in (A) in FIG. 1, a plurality of FFD devices and a plurality of RFD devices constitute a communication system with a star topology (star topology), where one FFD is a PAN controller. In the communication system with the star topology, the PAN controller performs data transmission with one or more other devices, that is, a one-to-many or many-to-one data transmission architecture may be established between a plurality of devices. In a system 102 shown in (B) in FIG. 1, a plurality of FFD devices and one RFD device constitute a communication system with a peer-to-peer topology (peer-to-peer topology), where one FFD is a PAN controller. In the communication system with the peer-to-peer topology, a many-to-many data transmission architecture may be established between a plurality of different devices.

It should be understood that (A) in FIG. 1 and (B) in FIG. 1 are merely simplified diagrams for ease of understanding, and do not constitute any limitation on application scenarios of this application. For example, the system 101 and/or the system 102 may further include another FFD and/or another RFD.

The UWB technology uses pulses with a nanosecond-level pulse width as its basic signals, features a high transmission rate, a large system capacity, a large spectrum bandwidth, an extremely low power spectral density, and can coexist with an existing short-range communication system. These features allow the UWB technology to have a high time resolution, a strong anti-multipath capability, and a centimeter-level ranging and positioning. Therefore, the UWB technology for ranging and positioning in complex multipath environments has become a research focus.

FIG. 2 is a diagram of an architecture of a range positioning system according to an embodiment of this application. As shown in FIG. 2, the range positioning system includes a plurality of devices (for example, a device 1 and a device 2 in FIG. 2), and may be an apparatus in embodiments of this application. Each device includes at least a first module and a second module. A bandwidth of an operating channel of the first module is less than a bandwidth of an operating channel of the second module. For example, the first module is a Bluetooth module, and the second module is a UWB module. The first module includes a medium access control (medium access control, MAC) layer, a physical (physical, PHY) layer, and a radio frequency (radio frequency, RF) layer. The second module includes a MAC layer, a PHY layer, and an RF layer. Information exchange between the first module of the first device and the first module of the second device is information exchange between the first device and the second device through a first channel, and information exchange between the second module of the first device and the second module of the second device is information exchange between the first device and the second device through a second channel.

In this application, the first module may be understood as a module, a circuit, a chip, a system, or the like that implements a narrowband communication technology (for example, Bluetooth, (wireless fidelity, Wi-Fi), narrowband internet of things (narrowband Internet of things, NB-IoT), or near field communication (near field communication, NFC)), and the first module may also be referred to as a narrowband signal processing module. Correspondingly, the second module may be understood as a module, a circuit, a chip, a system, or the like that implements a wideband communication technology (for example, UWB), and the second module may also be referred to as a wideband signal processing module. In a device (device), the first module and the second module may be different chips. Certainly, the first module and the second module may alternatively be integrated into one chip. Implementations of the first module and the second module in the device are not limited in this embodiment of this application. Because the second module may be implemented by using the wideband communication technology, a communication apparatus can have a high data throughput and high-precision positioning.

The device in this application may be a wireless communication chip, a wireless sensor, or a wireless communication terminal, for example, a user terminal, a user apparatus, an access apparatus, a subscriber station, a subscriber unit, a mobile station, a user agent, and user equipment that support Wi-Fi communication. The user terminal may include various handheld devices, vehicle-mounted devices, wearable devices, internet of things (internet of things, IoT) devices, or computing devices that have a wireless communication function, or another processing device connected to a wireless modem, user equipment (user equipment, UE) of various forms, a mobile station (mobile station, MS), a terminal (terminal), a terminal device (terminal device), a portable communication device, a handheld device, a portable computing device, an entertainment device, a game device or system, a global positioning system device, any other proper device configured to perform network communication via a wireless medium, and the like.

In addition, the device in this application may be a network device with a Wi-Fi chip. The network device may be a router, a relay station, a network device in a 5G network, a network device in a future 6G network, a network device in a public land mobile network (public land mobile network, PLMN), or the like. This is not limited in this embodiment of this application. The network device may be an access point for a terminal (for example, a mobile phone) to access a wired (or wireless) network, and is mainly deployed in a home, a building, and a park. A typical coverage radius is tens of meters to 100-odd meters. Certainly, the access point may alternatively be deployed outdoors. The network device is equivalent to a bridge that connects a wired network and a wireless network. The network device is mainly configured to connect various wireless network clients together and then connect the wireless network to the Ethernet.

It should be understood that the foregoing device may support the 802.15.4ab standard or the next generation standard of 802.15.4ab, or may support a plurality of standards such as 802.15.4a, 802.15.4-2011, 802.15.4-2015, and 802.15.4z, or may support a plurality of wireless local area network (wireless local area network, WLAN) standards of the 802.11 family such as 802.11ax, 802.11ac, 802.11n, 802.11g, 802.11b, 802.11a and 802.11be next generation. This is not limited in this application.

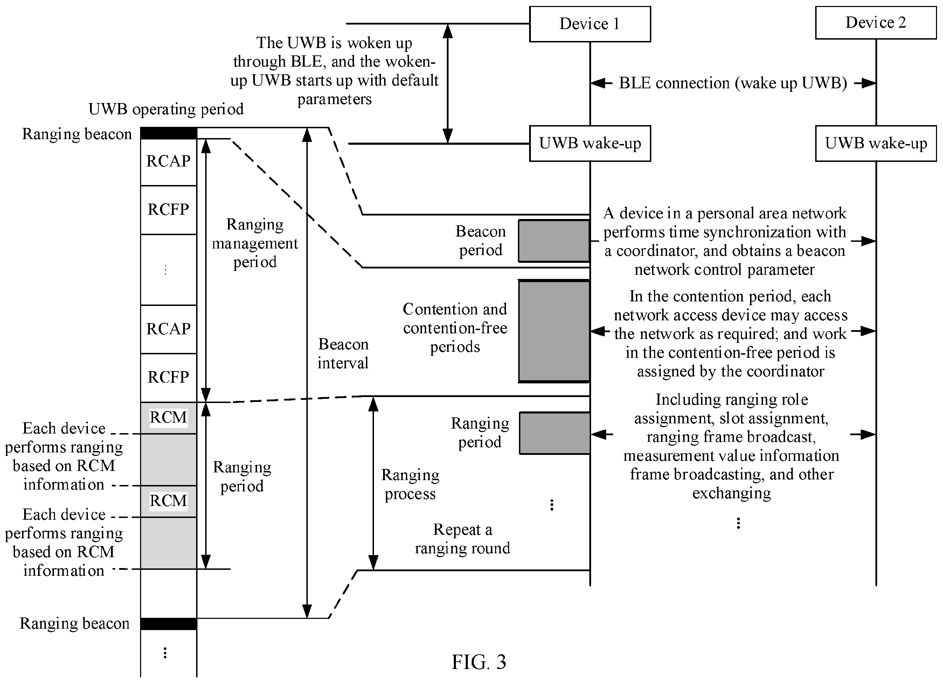

FIG. 3 is a flowchart of a ranging method. The method shown in FIG. 3 may be considered as application of a UWB technology for ranging. The method is described by using a one-to-one ranging procedure as an example. Implementation steps of the ranging procedure shown in FIG. 3 are specifically as follows:

(1) A device 1 and a device 2 may first wake up a UWB module using a Bluetooth low energy (Bluetooth low energy, BLE) module, and the UWB module starts up with default parameters applied, where the default parameters may include, for example, a channel number (channel number), preamble code (preamble code), and a rate that are defined during application initialization, as shown in FIG. 3.

After being woken up and startup, the UWB module performs networking and ranging. Specifically, the UWB module may complete a ranging management process and a ranging process in a beacon interval (beacon interval, BI).

In FIG. 3, a ranging beacon (beacon) is used for time synchronization of a personal area network in the UWB module and network parameter broadcasting. A ranging contention access period (ranging contention access period, RCAP), which is a contention period, is used by a device for accessing the personal area network. A ranging contention free period (ranging contention free period, RCFP), which is a contention-free period, is mainly used for slot assignment needed for interaction between devices. A ranging control message (ranging control message, RCM) is a ranging control frame for ranging period (ranging period) management.

The PAN, namely, personal area network (Personal Area Network, PAN), is an information network with a "personal small range" formed by using a new short-range radio technology, where the "personal small range" includes but is not limited to a user's personal home or office, or a range between personal information equipment. The personal area network may be regarded as a wireless local area network with a smaller coverage area than the wireless personal area network (Wireless Personal Area Network, WPAN). The core idea of the personal area network is to implement intelligent interconnection among personal information terminals via radio transmission instead of traditional wired cable transmission, and establish a personalized information network, for example, a wireless connection among home entertainment devices, a wireless connection between a computer and a peripheral device, and a connection between a cellular phone and a head-mounted Bluetooth headset.

(2) In a beacon period, the device 1, which is defined as a controller, is responsible for sending a beacon (beacon) frame for parameter broadcasting and time synchronization in the personal area network. After receiving the beacon frame, the device 2 joins the personal area network of the device 1 (the controller) as required.
(3) The device 1 (the controller) may indicate, via the beacon frame, whether contention and contention-free phases are needed. If the phases are needed, another device (for example, a device n) may join, in the contention and contention-free periods, the personal area network established by the device 1. If the phases are not needed, the current personal area network and related devices in the personal area network are maintained.
(4) In a ranging process, the device 1 serves as both a controller (controller) and an initiator (initiator), and the device 2 serves as both a controllee (controllee) and a responder (responder). A device sending ranging control information is the controller, and a device receiving the ranging control information is the controllee. A device sending a ranging frame is an initiator, and a device receiving a ranging control frame is a ranging responder. The device 1 is responsible for sending the ranging control frame, that is, the RCM. The ranging control frame may be used for role definition, slot assignment control, and the like. The role definition is to define which devices are used as initiators and which devices are used as responders. Slot assignment control is to assign time slices (such as slots, symbols, and frames) of each period by using the ranging control frame based on time division multiple address (time division multiple address, TDMA).

In this application, the controller may also be referred to as a coordinator, and the controllee may also be referred to as a coordinated party.

(5) The device 1 initiates a ranging frame #1. After receiving the ranging frame #1, the device 2 feeds back a ranging frame #2 to the device 2.

(6) Each device determines propagation time of the ranging frame #1 and the ranging frame #2 based on a receiving/sending moment of the ranging frame #1 and/or a receiving/sending moment of the ranging frame #2, to complete ranging between devices.

(7) The UWB module broadcasts a ranging result in the personal area network, for the device in the personal area network to obtain the ranging result between the device 1 and the device 2.

It should be noted that the foregoing process describes a ranging round (ranging round), the ranging process may include a plurality of ranging rounds, and each ranging round may repeat the foregoing steps (4) to (7) according to the foregoing steps.

The ranging round may also be referred to as a ranging cycle, which represents one ranging process.

In the method shown in FIG. 3, the UWB module needs to complete establishment of the personal area network and time slice assignment of each period, and also needs to complete ranging. In other words, functions implemented by the UWB module in the device are complex, bringing high power consumption for the device.

In view of this, this application provides a ranging method and apparatus. Exchanging of ranging control information and a measurement result is performed through a first channel, and ranging is performed through a second channel. Because a bandwidth of the first channel is less than a bandwidth of the second channel, power consumption of a device can be reduced.

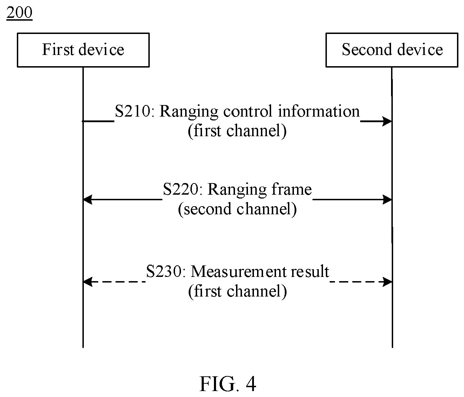

FIG. 4 is a diagram of the ranging method according to an embodiment of this application. As shown in FIG. 4, the method includes the following steps.

S210: A first device sends the ranging control information to a second device through the first channel, and correspondingly, the second device receives the ranging control information through the first channel.

The ranging control information is used to configure a ranging frame. In other words, the ranging control information is configuration information of the second channel, and indicates receiving/sending of information through the second channel.

The ranging control information (ranging control message) may also be referred to as a ranging control frame, and may be used to configure a ranging parameter. The ranging parameter is used for receiving/sending of the ranging frame. That is, based on the ranging control information, a transmitter may learn how to send the ranging frame, and a receiver may learn how to receive the ranging frame. The ranging control information may be used to configure a parameter related to receiving/sending of the ranging frame.

In this application, there may be one or more second devices. The ranging control information may be used to configure the one or more second devices to receive/send the ranging frame.

That the first device sends the ranging control information to the second device through the first channel may be understood as that the first device completes broadcasting of the ranging control information through the first channel, and the one or more second devices receive the ranging control information. That is, the ranging control information is sent in a broadcast manner.

S220: The first device receives and/or sends the ranging frame through the second channel, and correspondingly, the second device sends/receives the ranging frame through the second channel.

It should be understood that the first device includes a first module and a second module. That the first device performs sending through the first channel may be understood as that the first device performs sending using the first module, and that the first device performs sending through the second channel may be understood as that the first device performs sending using the second module. An operating channel of the first module is the first channel, an operating channel of the second module is the second channel, and a bandwidth of the second channel is greater than a bandwidth of the first channel.

For example, the first channel is an operating channel of a narrowband communication module, and the second channel is an operating channel of a wideband communication module.

In other words, the first device and the second device may transmit the ranging control information using the first module, so that the second module can focus on receiving/sending of the ranging frame. This can reduce power consumption of the second module of the first device and a second module of the second device.

Further, the first module has a low power consumption feature. Therefore, compared with transmitting the ranging control information using the second module, transmitting the ranging control information using the first module can reduce overall power consumption of the first device and the second device.

For example, the first channel is an operating channel of BLE, and the second channel is an operating channel of UWB. The BLE can resist narrowband interference because of use of frequency hopping spread spectrum, and features low power consumption and the like.

For example, a bandwidth of the second channel is 499.2 MHz, and the first channel is an operating channel of Bluetooth, Wi-Fi, NB-IoT, or NFC.

It should be understood that after S210 is performed, there are two cases:

Case 1: The first device may send a ranging frame #1 based on the ranging control information, and the second device receives the ranging frame #1. Further, the second device sends a ranging frame #2 to the first device, and the ranging frame #2 may be considered as a response to the ranging frame #1. The ranging frame #2 may be referred to as a response frame or acknowledgment (ack) of the ranging frame #1. The first device receives the ranging frame #2.

In this case, the first device may determine a time difference #1 between a sending moment of the ranging frame #1 and a receiving moment of the ranging frame #2, and the second device may determine a time difference #2 between a receiving moment of the ranging frame #1 and a sending moment of the ranging frame #2.

Case 2: The second device may send a ranging frame #1 based on the ranging control information, and the first device receives the ranging frame #1. Further, the first device sends a ranging frame #2 to the first device, and the ranging frame #2 may be considered as a response to the ranging frame #1. The ranging frame #2 may be referred to as a response frame, and the second device receives the ranging frame #2.

In this case, the second device may determine a time difference #1 between a sending moment of the ranging frame #1 and a receiving moment of the ranging frame #2, and the first device may determine a time difference #2 between a receiving moment of the ranging frame #1 and a sending moment of the ranging frame #2.

In the foregoing two cases, a distance between the first device and the second device can be obtained based on the time difference #1, the time difference #2, and propagation speeds of the ranging frames. The time difference #1 may be referred to as round-trip time (round-trip time, RTT) of the ranging frame, and the time difference #2 may be referred to as reply time (reply time) of the ranging frame.

In addition, for the receiver device of the ranging frame, an angle of arrival (angle of arrival, AOA) relative to the transmitter device can be further obtained. For example, in Case 1, the second device may further determine an angle of arrival of the second device relative to the first device based on receiving of the ranging frame #1. In Case 2, the first device may further determine an angle of arrival of the first device relative to the second device based on receiving of the ranging frame #1.

For example, with reference to FIG. 2 and FIG. 3, the first device may be understood as a controller. The first device may complete generation and assembly of the ranging control information via a MAC layer of the first module, for example, assembly into a position control negotiation (position control negotiation, PCN) message. Further, the ranging control information is sent via a PHY layer and an RF layer of the first module of the first device. Correspondingly, the second device may be understood as a controllee. The second device may receive the ranging control information via the RF layer and the PHY layer of the first module. Further, the MAC layer of the first module parses the ranging control information.

The second module may start ranging based on the broadcast ranging control information in S210. Specifically, for a ranging process, there are two roles: an initiator and a responder. The ranging frame #1 is generated at a MAC layer of the second module of the initiator (for example, the first device), and is broadcast via a PHY layer and an RF layer of the second module. The ranging frame #1 is received at an RF layer and a PHY layer of the second module of the responder (for example, the second device). Further, the ranging frame #2 is generated at a MAC layer of the second module of the responder, and is broadcast via the PHY layer and the RF layer of the second module. The ranging frame #2 is received at the RF layer and the PHY layer of the second module of the initiator. The MAC layer of the second module of the initiator may obtain a measurement result, where the measurement result includes the time difference #1. The MAC layer of the second module of the ranging responder may obtain a measurement result, where the measurement result includes the time difference #2. The foregoing process may be considered as a ranging round.

Based on the solution in the foregoing embodiment, the first device and the second device may perform interaction of the ranging control information through the first channel, and perform ranging through the second channel. Because interaction of the ranging control information is completed through the first channel, and the bandwidth of the first channel is less than the bandwidth of the second channel, power consumption of the device can be reduced.

It should be understood that, in the method 200, the first device is both a controller and an initiator or a responder. In another embodiment, the first device may be used only as a controller, and the second device is an initiator or a responder. That is, in this embodiment, the first device performs only S210, and does not perform S220. For example, a device #1 (an example of the first device) may send ranging control information, a device #2 (the second device) and a device #3 (another example of the second device) receive the ranging control information, and further, the device #2 completes ranging with the device #3 through exchange of the ranging frame.

The following describes the foregoing ranging control information in detail.

In an implementation, the ranging control information includes first information, and the first information indicates whether the ranging frame includes a channel impulse response training sequence (channel impulse response training sequence, CTS).

The ranging frame has a plurality of formats. Each format includes fields such as a synchronization (synchronization, SYNC) field and a start delimiter (start frame delimiter, SFD). Some ranging frames may further include fields such as a CTS or a scrambled timestamp sequence (scrambled timestamp sequence, STS). The CTS may be used to improve ranging precision and ranging security. In this application, the format of the ranging frame is classified into a ranging frame including a CTS and a ranging frame including no CTS. The first information may indicate whether the ranging frame includes the CTS, or the first information may indicate the format of the ranging frame.

In this embodiment of this application, the ranging control information may include a format of the ranging frame, so that the controllee can send or parse the ranging frame based on the format. This makes the ranging method highly feasible.

In an implementation, the ranging control information includes second information, and the second information indicates delay time between a clock synchronization moment and a first slot in a ranging round.

Therefore, in Case 1 in S220, the first device may send, based on the second information, the ranging frame after the delay time indicated by the second information expires. In Case 2, the second device may send, based on the second information, the ranging frame after the delay time indicated by the second information expires.

In this embodiment of this application, the ranging control information may include the delay time between the clock synchronization moment and the first slot in the ranging round, so that the controllee can learn when to receive/send the ranging frame. This makes the ranging method highly feasible.

In an implementation, the ranging control information may include information indicated by a first information element, where the information indicated by the first information element includes the first information and the second information, and the first information element indicates control information such as a ranging mode and ranging duration.

Optionally, the first information element may be referred to as a ranging mode definition (ranging mode definition, RMD) information element (information element, IE).

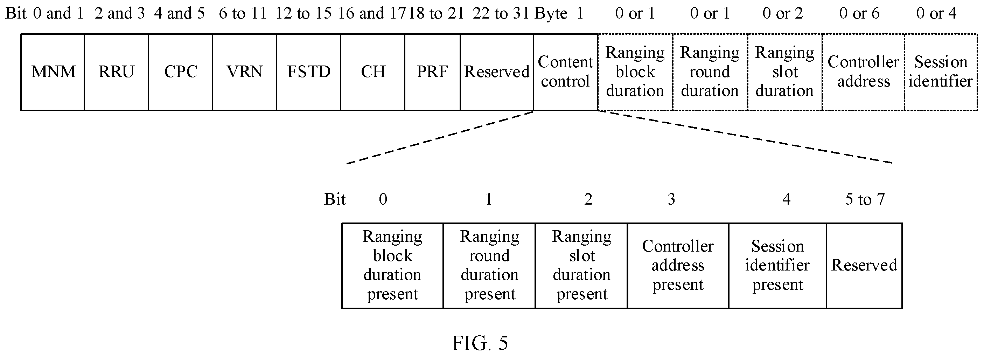

FIG. 5 is a diagram of a format of the first information element according to an embodiment of this application. As shown in FIG. 5, the first information element includes a multi-node mode (multi-node mode, MNM) field, a ranging round usage (ranging round usage, RRU) field, a CTS packet configuration (CTS packet config, CPC) field, a validity rounds number (validity rounds number, VRN) field, a first slot time delay (first slot time delay, FSTD) field, a channel identifier (channel identifier, CH) field, a mean-pulse repetition frequency identifier (mean-pulse repetition frequency identifier, RPF) field, and a content control (content control) byte. Specifically, indication meanings of the fields are as follows:

(1) The MNM field indicates a ranging mode, and the ranging mode includes one-to-one (one-to-one) ranging, one-to-many (one-to-many) ranging, and many-to-many (many-to-many) ranging. For example, the MNM field may be 2 bits. For example, when a value of the MNM field is 0, it indicates that the ranging mode is one-to-one ranging. When a value of the MNM field is 1, it indicates that the ranging mode is one-to-many ranging. When a value of the MNM field is 2, it indicates that the ranging mode is many-to-many ranging. When a value of the MNM field is 3, it indicates that the field is a reserved (reserved) field.

It should be understood that the reserved field in this application may also be referred to as a preserved field, and indicates that the field has no indication function.

In addition, in this application, a same term has a same meaning in the context. After the foregoing description is provided, details are not described below.

(2) The RRU field indicates a used ranging method, and the ranging method includes one-way ranging (one-way ranging, OWR), single side-two way ranging (single side-two way ranging, SS-TWR), and double side-two way ranging (double side-two way ranging, DS-TWR). For example, the RRU field may be 2 bits. When a value of the RRU field is 0, it indicates that the used ranging method is OWR. When a value of the RRU field is 1, it indicates that the used ranging method is SS-TWR. When a value of the RRU field is 2, it indicates that the used ranging method is DS-TWR. When a value of the RRU field is 0, the field is a reserved field. A valid range of the ranging method indicated by the field is a current ranging round and a ranging round indicated by the VRN field.

For example, if a value of the RRU field is 1, and a value of the VRN field is 2, it indicates that the used ranging method is SS-TWR, and the ranging method is valid in a current ranging round and two consecutive ranging rounds after the current ranging round.

(3) The CPC field indicates whether the ranging frame includes the CTS. For example, the CPC field may be 2 bits. When a value of the CPC field is 0, it indicates that the ranging frame does not include the CTS. When a value of the CPC field is 1, it indicates that the ranging frame includes the CTS. When a value of the field is 2 or 3, the field is a reserved (reserve) field.

The first information may be carried in the CPC field.

(4) A value of the VRN field indicates a quantity of consecutive ranging rounds in which control information indicated by the first information element is valid. For example, if a value of the VRN field is 2, it indicates that the control information indicated by the first information element is valid in two consecutive ranging rounds. A value of the VRN field is not greater than a quantity of remaining ranging rounds in a ranging block (ranging block). For example, the VRN field may be 6 bits, and a value range of the VRN field may be 0 to 63, indicating 0 to 63 ranging rounds (0 to 63 number of rounds).

(5) The FSTD field indicates delay time between a clock synchronization moment and a first slot in the ranging round, and a minimum unit of the delay time may be ranging slot duration (ranging slot duration). For example, the FSTD field may be 4 bits, and a value range of the FSTD field may be 0 to 15, and indicates that the delay time may be 0 to 15 slots (0 to 15 slots delay).

The first information may be carried in the FSTD field.

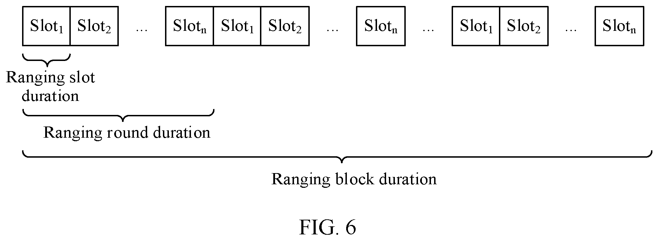

In addition, for description of the ranging slot duration, refer to FIG. 6.

(6) The CH field is used to identify a channel for sending the ranging frame. For example, the CH field may be 2 bits. When a value of the CH field is 0, it indicates that the channel for sending the ranging frame is a channel 5 (CH5). When a value of the CH field is 1, it indicates that the channel for sending the ranging frame is a channel 6 (CH6). When a value of the CH field is 2, it indicates that the channel for sending the ranging frame is a channel 8 (CH8). When a value of the CH field is 3, it indicates that the channel for sending the ranging frame is a channel 9 (CH9). The second channel includes the channel 5, the channel 6, the channel 8, and the channel 9.

(7) The PRF field is used to identify a mean-pulse repetition frequency (mean-PRF) for sending the ranging frame. For example, the PRF field may be 4 bits, and a value range of the PRF field is 0 to 15, respectively corresponding to identifiers 0 to 15 of the mean-pulse repetition frequency (0 to 15 sets of mean-PRF).

(8) The control content byte includes a ranging block duration present (ranging block duration present) indication bit, a ranging round duration present (ranging round duration present) indication bit, a ranging slot duration present (ranging slot duration present) indication bit, a controller address present (controller address present) indication bit, and a session identifier present (session ID present) indication bit, and each indication bit is 1 bit. If a value of an indication bit is 1, it indicates that the first information element includes a corresponding field. If a value of an indication bit is 0, it indicates that the first information element does not include a corresponding field. For example, if a value of the ranging block duration present indication bit is 1, it indicates that the first information element includes a ranging block duration field. For another example, if a value of the controller address present indication bit is 0, it indicates that the first information element does not include a controller address field.

In other words, the control content byte indicates whether the first information element includes one or more of the following control bytes: ranging block duration (ranging block duration), ranging round duration (ranging round duration), ranging slot duration (ranging slot duration), a controller address (controller address), and a session identifier (session ID).

The ranging block duration field indicates a quantity of ranging rounds included in the ranging block. A ranging round duration field indicates a quantity of ranging slots included in the ranging round. A ranging slot duration field indicates a time length of a slot (slot). The controller address field indicates an address of a device serving as the controller. A session identifier field is a unique session identifier of a ranging device currently participating in the ranging round.

FIG. 6 shows a relationship between the ranging block duration, the ranging round duration, and the ranging slot duration.

A unit of a time length indicated by the ranging slot duration field is a ranging scheduling time unit (ranging scheduling time unit, RSTU). The RSTU uses a definition in a high recurrence rate (High recurrence rate, HRP) UWB physical layer (physical layer, PHY) standard, a bandwidth is 499.2 MHz, and one RSTU includes 416 chips (chips). A calculation formula is as follows:

$$1RSTU = 416chips = \frac{416}{499.2 \times 10^6} \approx 833.33ns$$

In an implementation, the ranging control information includes third information, the third information indicates the second device to feed back a ranging measurement value, or feed back a ranging measurement value and a positioning result that is of the second device and that is obtained based on the ranging measurement value, and the ranging measurement value includes information obtained based on exchange of the ranging frame.

The ranging measurement value is information for determining a distance and an angle, and the ranging measurement value includes the information obtained based on exchange of the ranging frame.

Optionally, the ranging measurement value includes a time difference #1 or a time difference #2.

For example, in Case 1 in S220, information obtained by the second device based on exchange of the ranging frame includes the time difference #2, and information obtained by the first device based on exchange of the ranging frame includes the time difference #1. For another example, in Case 2 in S220, information obtained by the second device based on exchange of the ranging frame includes the time difference #1, and information obtained by the first device based on exchange of the ranging frame includes the time difference #2.

Optionally, the ranging measurement value includes an angle of arrival.

For example, in Case 1 in S220, the information obtained by the second device based on exchange of the ranging frame further includes an angle of arrival of the second device relative to the first device. For another example, in Case 2, the information obtained by the first device based on exchange of the ranging frame further includes an angle of arrival of the first device relative to the second device.

In addition, based on the ranging measurement value, a positioning result of the device may be further obtained.

In other words, the third information may indicate whether the second device needs to feed back the positioning result.

In this embodiment of this application, the ranging control information may include an indication indicating whether to feed back the positioning result, so that when feeding back the ranging measurement value, the controllee can further learn whether location-related information needs to be fed back. This helps improve diversity of measurement results and has higher efficiency.

In an implementation, the third information indicates the second device to feed back the ranging measurement value and the positioning result. In this case, the ranging control information may include fourth information, and the fourth information indicates that the positioning result is a location of the second device relative to the first device, or a positioning result in an absolute coordinate system.

In other words, the fourth information indicates a coordinate system type of the positioning result, that is, whether the positioning result is a location in a relative coordinate system or an absolute location in a communication system in which the first device is included.

In this embodiment of this application, the ranging control information may include an indication indicating a coordinate system type of the positioning result, so that when determining the positioning result, the controllee can learn whether to determine the relative location or the absolute location. This helps improve diversity of measurement results and has higher efficiency.

In an implementation, the ranging control information may include information indicated by a second information element, where the information indicated by the second information element includes the third information and the fourth information, and the second information element indicates a needed measurement result, that is, indicates a ranging and positioning result requirement.

Optionally, the second information element may be referred to as a range positioning result requirement (ranging position result requirements, RPRR) IE.

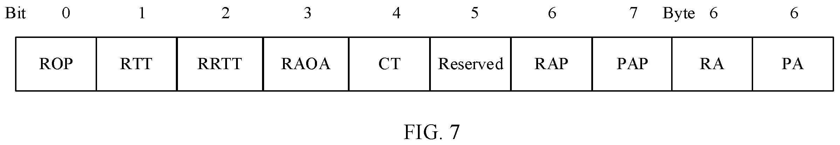

FIG. 7 is a diagram of a format of the second information element according to an embodiment of this application. As shown in FIG. 7, the second information element includes a ranging or positioning (ranging or position, ROP) field, a report reply time (report reply time, RRT) field, a report round-trip time (report round-trip time, RRTT) field, a report angle of arrival (report AOA, RAOA) field, a coordinate type (coordinate type, CT) field, a requestor address present (requestor address present, RAP) field, a provider address present (provider address present, PAP) field, a requestor address (requestor address, RA) field, and a provider address (provider address, PA) field. Specifically, indication meanings of the fields are as follows:

    (1) The ROP field indicates to feed back a ranging measurement value, or feed back a ranging measurement value and a positioning result obtained based on the ranging measurement value. For example, the ROP field may be 1 bit. When the 1 bit is set to 0, it indicates to request the ranging measurement value. When the 1 bit is set to 1, it indicates to request the ranging measurement value and the positioning result.

The third information may be carried in the ROP field.

    (2) The RRT field indicates whether reply time needs to be fed back. For example, the RRT field may be 1 bit. When the 1 bit is set to 0, it indicates that the reply time and a confidence of the reply time do not need to be fed back. When the 1 bit is set to 1, it indicates that the reply time and a confidence of the reply time need to be fed back (report).
    (3) The RRTT field indicates whether round-trip time needs to be fed back. For example, the RRTT field may be 1 bit. When the 1 bit is set to 0, it indicates that the round-trip time and a confidence of the round-trip time do not need to be fed back. When the 1 bit is set to 1, it indicates that the round-trip time and a confidence of the round-trip time need to be fed back.
    (5) The CT field indicates a coordinate system type of the positioning result. For example, the CT field may be 1 bit. When the 1 bit is set to 0, it indicates to return a location in a relative coordinate system. When the 1 bit is set to 1, it indicates to return a location in an absolute coordinate system.

The fourth information may be carried in the CT field.

(4) The RAOA field indicates whether an AOA needs to be fed back. For example, the RAOA field may be 1 bit. When the 1 bit is set to 0, it indicates that an AOA does not need to be fed back. When the 1 bit is set to 1, it indicates that an AOA and a confidence of the AOA need to be fed back.

It should be understood that when the ROP field indicates to feed back the ranging measurement value and the positioning result, the CT field has an indication function, that is, the controllee may read the field. When the ROP field indicates that only the ranging measurement value is fed back, the CT field may have no indication function, that is, the controllee may not read the field.

(6) The RAP field indicates whether the second information element includes an address of a measurement value requestor device. For example, the RAP field may be 1 bit. When the 1 bit is set to 0, it indicates that the second information element does not include the address of the measurement value requestor device. When the 1 bit is set to 1, it indicates that the second information element includes the address of the measurement value requestor device.

The measurement value requestor device is a device that needs to obtain a measurement result, and the measurement value requestor may be determined in a process of establishing a personal area network, and the address of the measurement value requestor is carried in the second information element.

Optionally, the first device and the second device may complete establishment of the personal area network before performing S210.

(7) The PAP field indicates whether the second information element includes an address of a measurement value provider device. For example, the PAP field may be 1 bit. When the 1 bit is set to 0, it indicates that the second information element does not include the address of the measurement value provider device. When the 1 bit is set to 1, it indicates that the second information element includes the address of the measurement value provider device.

The measurement value provider is a device that provides the measurement result, and the measurement value provider may be determined in a process of establishing the personal area network, and the address of the measurement value provider is carried in the second information element.

(8) The RA field indicates the address of the measurement value requestor device. When the RAP field indicates that the second information element includes the address of the measurement value requestor device, the RA field carries the address of the measurement value requestor device.

(9) The PA field indicates the address of the measurement value provider device. When the PAP field indicates that the second information element includes the address of the measurement value provider device, the PA field carries the address of the measurement value provider device.

In an implementation, the ranging control information may include information indicated by a third information element, where the third information element indicates a slot and a ranging role that are woken up and that are needed by a device participating in ranging in a current ranging round, and the third information element indicates slot assignment.

Optionally, the third information element may be referred to as a ranging slot assignment (ranging slot assignment, RSA) IE.

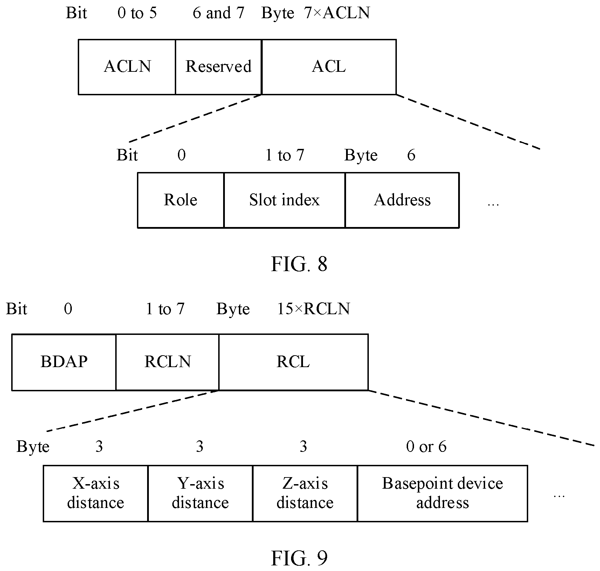

FIG. 8 is a diagram of a format of the third information element according to an embodiment of this application. As shown in FIG. 8, the third information element includes an assignment content list number (assignment content list number, ACLN) field and an assignment content list (assignment content list, ACL) field. Specifically, indication meanings of the fields are as follows:

(1) The ACLN field indicates a quantity of ACL fields included in the third information element. For example, the ACLN field may be 6 bits, and a value range of the ACLN field is 0 to 63, respectively indicating 0 to 63 ACL fields.

(2) One ACL field corresponds to one piece of slot assignment information. The ACL field includes a role (role) field, a slot index (slot index) field, and an address (address) field #1. Specifically, the role field indicates a role for which the ACL field is configured, for example, whether the ACL field is configured for an initiator or a responder. The slot index field indicates a subscript of a slot of a device corresponding to the ACL field. For details of the subscript of the slot, refer to FIG. 6. The address field #1 indicates an address #1 of the device corresponding to the ACL field, and the address #1 is an address of the device that the ACL field is used to configure.

For example, as shown in FIG. 8, one ACL field may be 7 bytes, and the role field may be 1 bit. When the field is set to 0, it indicates to configure the initiator. When the field is set to 1, it indicates to configure the responder. The slot index field may be 7 bits, and a value range of the slot index field is 0 to 127, respectively corresponding to subscripts of slots in a ranging round. The address field #1 is 6 bytes, and is used to carry an address of the corresponding device.

Optionally, the method 200 further includes: S230: The first device receives or sends the measurement result through the first channel, and correspondingly, the second device sends or receives the measurement result through the first channel.

The measurement result is determined based on the ranging frame.

Specifically, the measurement result may include at least one of a ranging result, an angle measurement result, and a positioning result. The ranging result indicates distance-related information, the angle measurement result indicates angle-related information, and the positioning result indicates location-related information. The time difference #1 and the time difference #2 may be used to determine the ranging result, and the AOA is the angle measurement result.

In an implementation, in the foregoing Case 1, the first device may send the time difference #1 to the second device, and the second device determines the distance between the first device and the second device. In this case, the first device may send the measurement result to the second device through the first channel. The measurement result includes information about the time difference #1.

In another implementation, in the foregoing Case 1, the second device may alternatively send the time difference #2 to the first device, and the first device determines the distance between the first device and the second device. In this case, the second device may send the measurement result to the first device through the first channel. The measurement result includes information about the time difference #2.

Similarly, in an implementation, in the foregoing Case 2, the second device may send the time difference #1 to the first device, and the first device determines the distance between the first device and the second device. In this case, the second device may send the measurement result to the first device through the first channel. The measurement result includes information about the time difference #1.

Similarly, in another implementation, in the foregoing Case 2, the first device may alternatively send the time difference #2 to the second device, and the second device determines the distance between the first device and the second device. In this case, the first device may send the measurement result to the second device through the first channel. The measurement result includes information about the time difference #2.

Optionally, the measurement result further includes an AOA.

Still with reference to FIG. 2 and FIG. 3, S230 may be understood as follows: After a ranging round is completed, the measurement result may be reported to the MAC layer of the first module via the MAC layer of the second module, and generation and assembly of the measurement result is completed via the MAC layer of the first module, for example, the measurement result is assembled into a positioning result negotiation (position result negotiation, PRN) message, and the measurement result is broadcast via the PHY layer and the RF layer of the first module. Steps S210, S220, and S230 are repeated, to complete a ranging procedure in a subsequent ranging round.

Based on the solution in the foregoing embodiment, after performing ranging through the second channel, the first device and the second device may further broadcast the measurement result through the first channel. Because broadcasting of the measurement result is completed through the first channel, and the bandwidth of the first channel is less than the bandwidth of the second channel, power consumption of the device can be reduced.

In an implementation, the measurement result includes location information.

Specifically, the location information may include at least one of fifth information, sixth information, and seventh information.

The fifth information indicates whether the measurement result includes an address of a basepoint device. Alternatively, the fifth information indicates whether the location information includes an address of a basepoint device.

Specifically, the basepoint device is in the communication system in which the first device is included. That is, the basepoint device and the first device are in the same communication system, or the basepoint device and the first device are in the same positioning system.

The sixth information indicates a quantity N of positioning results included in the measurement result, and N is a positive integer.

The seventh information indicates the positioning result.

In this embodiment of this application, the measurement result may include the location information. Specifically, the measurement result may include at least one of an indication indicating whether the measurement result includes the address of the basepoint device, an indication indicating the quantity of positioning results, and the positioning result, so that the controller can learn of the location information. This improves diversity of measurement results and has higher efficiency.

In an implementation, the measurement result may include information indicated by a fourth information element, where the information indicated by the fourth information element includes the fifth information, the sixth information, and the seventh information, and the fourth information element indicates the positioning result.

Optionally, the fourth information element may be referred to as a positioning result (position result, PR) IE.

FIG. 9 is a diagram of a format of the fourth information element according to an embodiment of this application. As shown in FIG. 9, the fourth information element includes a basepoint device address present (basepoint device address present, BDAP) field, a result content lists number (result content lists number, RCLN) field #1, and a result content list (result content list, RCL) field #1. Specifically, meanings of the fields are as follows:

(1) The BDAP field indicates whether the RCL field #1 in the fourth information element includes the address of the basepoint device. For example, the BDAP field may be 1 bit. When the 1 bit is set to 0, it indicates that the RCL field #1 does not include the address of the basepoint device. When the 1 bit is set to 1, it indicates that the RCL field #1 includes the address of the basepoint device.

The fifth information may be carried in the BDAP field.

(2) The RCLN field #1 indicates a quantity of RCL fields #1 included in the fourth information element. For example, the RCLN field may be 7 bits, and a value range of the RCLN field is 0 to 127, respectively indicating 0 to 127 RCL fields #1.

The sixth information may be carried in the RCLN field.

(3) The RCL field #1 indicates the positioning result, and one RCL field #1 corresponds to one positioning result. Specifically, one RCL field #1 includes an X-axis distance (X-axis distance) field, a Y-axis distance (Y-axis distance) field, a Z-axis distance (Z-axis distance) field, and a basepoint device address (basepoint device address) field.

The X-axis distance field indicates a distance value in an X-axis direction relative to a coordinate origin. The unit is mm.

The Y-axis distance field indicates a distance value in a Y-axis direction relative to the coordinate origin. The unit is mm.

The Z-axis distance field indicates a distance value in a Z-axis direction relative to the coordinate origin. The unit is mm.

The basepoint device address field indicates the address of the basepoint device, that is, an address of a device used as the coordinate origin. When the BDAP field indicates that the RCL field #1 includes the address of the basepoint device, the basepoint device address field carries the address of the device used as the coordinate origin.

For example, one RCL field #1 may be 15 bytes, where the X-axis distance field, the Y-axis distance field, and the Z-axis distance field may be 3 bytes respectively, and the basepoint device address field may be 0 or 6 bytes.

The sixth information may be carried in the RCL field #1.

It should be understood that, when the fourth information indicates that the location in the relative coordinate system is returned, the basepoint device address field needs to be set, indicating that the positioning result is a result relative to the basepoint device. When the fourth information indicates that the location in the absolute coordinate system is returned, the basepoint device address field does not need to be set, and the basepoint device is a default device in the communication system.

It should be further understood that, when the third information indicates to feed back the ranging measurement value and the positioning result obtained based on the ranging measurement value, the measurement result may include the fifth information, the sixth information, and the seventh information. When the third information indicates to feed back the ranging measurement value, the measurement result may not include the fifth information, the sixth information, and the seventh information.

In an implementation, the measurement result includes eighth information, and the eighth information indicates whether the measurement result includes a confidence of the reply time of the ranging frame.

In other words, the eighth information may indicate whether the measurement result includes a confidence of the time difference #2.

In an implementation, the measurement result includes ninth information, and the ninth information indicates whether the measurement result includes a confidence of the round-trip time of the ranging frame.

In other words, the ninth information may indicate whether the measurement result includes a confidence of the time difference #1.

It should be understood that, in this application, the confidence may also be referred to as a figure of merit (Figure of merit, FoM) indicating credibility of a result.

Optionally, the measurement result includes the confidence of the reply time of the ranging frame and/or the confidence of the round-trip time of the ranging frame.

In this application, the eighth information and/or the ninth information are/is carried in the measurement result, so that the confidence of the reply time of the ranging frame and/or the confidence of the round-trip time of the ranging frame can be indicated. This helps improve accuracy of the ranging result.

In an implementation, the measurement result may include information indicated by a fifth information element, where the information indicated by the fifth information element includes the eighth information and the ninth information, and the fifth information element indicates a ranging result and an angle measurement result.

Optionally, the fifth information element may be referred to as a ranging AOA result (ranging AOA result, PAR) IE.

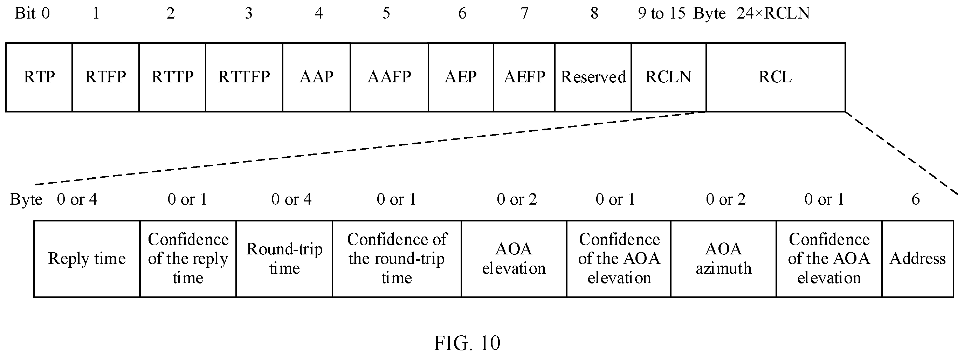

FIG. 10 is a diagram of a format of the fifth information element according to an embodiment of this application. As shown in FIG. 10, the fifth information element includes a reply time present (reply time present, RTP) field, a reply time FoM present (reply time FoM present RTFP) field, a round-trip time present (round-trip time present, RTTP) field, a round-trip time FoM present (round-trip time FoM present, RTTFP) field, an AOA elevation present (AOA azimuth present, AAP) field, an AOA elevation FoM present (AOA azimuth FoM present, AAFP) field, an AOA azimuth present (AOA elevation present, AEP) field, an AOA azimuth FoM present (AOA elevation FoM present, AEFP) field, a result content lists number (result content lists number, RCLN) field #2, and a result content list (result content list, RCL) field #2. Specifically, meanings of the fields are as follows:

(1) The RTP field indicates whether the RCL field #2 includes reply time. For example, the field may be 1 bit. When the 1 bit is set to 0, it indicates that the RCL field #2 does not include a result of the reply time. When the RTP field is set to 1, it indicates that the RCL field #2 includes a result of the reply time.

(2) The RTFP field indicates whether the RCL field #2 includes a confidence of the reply time. For example, the field may be 1 bit. When the 1 bit is set to 0, it indicates that the RCL field #2 does not include the confidence of the reply time. When the 1 bit is set to 1, it indicates that the RCL field #2 includes the confidence of the reply time.

The eighth information may be carried in the RTFP field.

(3) The RTTP field indicates whether the RCL field #2 includes round-trip time. For example, the field may be 1 bit. When the 1 bit is set to 0, it indicates that the RCL field #2 does not include a result of the round-trip time. When the 1 bit is set to 1, it indicates that the RCL field #2 includes a result of the round-trip time.

(4) The RTTFP field indicates whether the RCL field #2 includes a confidence of the reply time. For example, the field may be 1 bit. When the 1 bit is set to 0, it indicates that the RCL field #2 does not include the confidence of the round-trip time. When the 1 bit is set to 1, it indicates that the RCL field #2 includes the confidence of the round-trip time.

The ninth information may be carried in the RTTFP field.

(5) The AAP field indicates whether the RCL field #2 includes an AOA elevation. For example, the field may be 1 bit. When the 1 bit is set to 0, it indicates that the RCL field #2 does not include AOA elevation information. When the 1 bit is set to 1, it indicates that the RCL field #2 includes AOA elevation information.

(6) The AAFP field indicates whether the RCL field #2 includes a confidence of the AOA elevation. For example, the field may be 1 bit. When the 1 bit is set to 0, it indicates that the RCL field #2 does not include the confidence of the AOA elevation. When the 1 bit is set to 1, it indicates that the RCL field #2 includes the confidence of the AOA elevation.

(7) The AEP field indicates whether the RCL field #2 includes an AOA azimuth. For example, the field may be 1 bit. When the 1 bit is set to 0, it indicates that the RCL field #2 does not include AOA azimuth information. When the 1 bit is set to 1, it indicates that the RCL field #2 includes AOA azimuth information.

(8) The AEFP field indicates whether the RCL field #2 includes a confidence of the AOA azimuth. For example, the field may be 1 bit. When the 1 bit is set to 0, it indicates that the RCL field #2 does not include the confidence of the AOA azimuth. When the 1 bit is set to 1, it indicates that the RCL field #2 includes the confidence of the AOA azimuth.

(9) The RCLN field #2 indicates a quantity of RCL fields #2 included in the fifth information element.

(10) The RCL field #2 indicates a ranging measurement value, the ranging measurement value includes a ranging result and an angle measurement result, and one RCL field #2 corresponds to one ranging measurement value. Specifically, one RCL field #2 includes:

A reply time field indicates reply time of Tx-to-Rx, that is, the time difference #2.

A reply time FoM (reply time FoM) field indicates a confidence of the reply time.

A round-trip time field indicates round-trip time of Tx-to-Rx, that is, the time difference #1.

A round-trip time FoM (RTT FoM) field indicates a confidence of the round-trip time.

An AOA elevation field indicates an elevation result in the angle measurement result.

An AOA elevation FoM field indicates a confidence of the elevation result.

An AOA azimuth field indicates an azimuth result in the angle measurement result.

An AOA azimuth FoM field indicates a confidence of the azimuth result.

An address field #2 indicates an address #2 of a device corresponding to the RCL field #2, and the address #2 is an address of a device obtaining a measurement result in the RCL field #2.

For example, as shown in FIG. 10, the reply time field and the round-trip time field may be 0 or 4 bytes, the AOA elevation field and the AOA azimuth field may be 0 or 2 bytes, and the address field #2 may be 6 bytes. Any FoM field is defined as an 8-bit unsigned integer. The value ranges from 0 to 255. A larger value indicates a higher confidence of the corresponding measurement quantity. The value 0 indicates that the corresponding measurement quantity is incredible.

It should be understood that, when the RRT field in the second information element indicates to feed back the reply time and the confidence of the reply time, the second device may determine, based on a capability of the second device, whether to feed back the confidence of the reply time, that is, the second device may feed back only the reply time, or feed back the reply time and the confidence of the reply time, and indicate, by using the eighth information, whether the measurement result includes the confidence of the reply time. Similarly, when the RRTT field in the second information element indicates to feed back the round-trip time and the confidence of the round-trip time, the second device may determine, based on a capability of the second device, whether to feed back the confidence of the feedback time, that is, the second device may feed back only the round-trip time, or feed back the round-trip time and the confidence of the round-trip time, and indicate, by using the ninth information, whether the measurement result includes the confidence of the round-trip time.

The foregoing describes the method embodiments in embodiments of this application, and the following describes corresponding apparatus embodiments. It should be understood that descriptions of the apparatus embodiments correspond to the descriptions of the method embodiments, and therefore for content not described in detail, refer to the foregoing method embodiments.

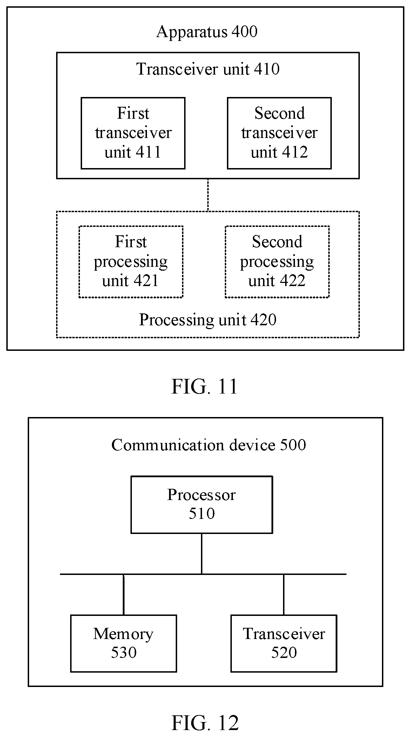

FIG. 11 is a block diagram of a communication apparatus according to an embodiment of this application. As shown in FIG. 11, the apparatus 400 may include a transceiver unit 410. The transceiver unit 410 may communicate with the outside, and the transceiver unit 410 may also be referred to as a communication interface or a communication unit. Specifically, the transceiver unit 410 may include a first transceiver unit 411 and a second transceiver unit 412.

Optionally, the apparatus further includes a processing unit 420, and the processing unit 420 is configured to perform data processing. The processing unit 420 may include a first processing unit 421 and a second processing unit 422.

In a possible design, the apparatus 400 may be the first device in the foregoing method embodiments, or may be a chip configured to implement a function of the first device in the foregoing method embodiments. The apparatus 400 may include units configured to perform the method performed by the first device in the method 200.

Specifically, the first transceiver unit 411 is configured to send ranging control information to a second device through a first channel, where the ranging control information is used to configure a ranging frame; and the second transceiver unit 412 is configured to receive or send the ranging frame through a second channel, where a bandwidth of the second channel is greater than a bandwidth of the first channel.

Optionally, the ranging control information includes first information, and the first information indicates whether the ranging frame includes a channel impulse response training sequence CTS.

Optionally, the ranging control information includes second information, and the second information indicates delay time between a clock synchronization moment and a first slot in a ranging round.

Optionally, the ranging control information includes third information, the third information indicates the second device to feed back a ranging measurement value, or feed back a ranging measurement value and a positioning result that is of the second device and that is obtained based on the ranging measurement value, and the ranging measurement value includes information obtained based on exchange of the ranging frame.

Optionally, the information obtained based on exchange of the ranging frame includes a time difference between a receiving moment of the ranging frame and a sending moment of acknowledgment of the ranging frame, or a time difference between a sending moment of the ranging frame and a receiving moment of acknowledgment of the ranging frame.

Optionally, the information obtained based on exchange of the ranging frame includes an angle of arrival of the second device relative to the first device.

Optionally, the third information indicates the second device to feed back the ranging measurement value and the positioning result, the ranging control information further includes fourth information, and the fourth information indicates that the positioning result is a location of the second device relative to the first device, or a positioning result in an absolute coordinate system.

Optionally, the first transceiver unit 411 is further configured to receive or send a measurement result through the first channel, and the measurement result is determined based on the ranging frame.

Optionally, the measurement result includes at least one of fifth information, sixth information, and seventh information. The fifth information indicates whether the measurement result includes an address of a basepoint device, and the basepoint device is in a communication system in which the first device is included; the sixth information indicates a quantity N of positioning results included in the measurement result, and N is a positive integer; and the seventh information indicates the positioning result.

Optionally, the measurement result includes at least one of eighth information and ninth information. The eighth information indicates whether the measurement result includes a confidence of reply time, and the reply time is the time difference between the receiving moment of the ranging frame and the sending moment of acknowledgment of the ranging frame; and the ninth information indicates whether the measurement result includes a confidence of round-trip time, and the round-trip time is the time difference between the sending moment of the ranging frame and the receiving moment of acknowledgment of the ranging frame.

Optionally, the bandwidth of the second channel is 499.2 MHz.

Optionally, the second channel is an operating channel of the UWB.

Optionally, the first channel is an operating channel of Bluetooth, Wi-Fi, NB-IoT, or NFC.

In another possible design, the apparatus 400 may be the second device in the foregoing method embodiments, or may be a chip configured to implement a function of the second device in the foregoing method embodiments. The apparatus 400 may include units configured to perform the method performed by the second device in the method 200.

Specifically, the first transceiver unit 411 is configured to receive ranging control information through a first channel, where the ranging control information is used to configure a ranging frame; and the second transceiver unit 412 is configured to send or receive the ranging frame through a second channel, where a bandwidth of the second channel is greater than a bandwidth of the first channel.

Optionally, the ranging control information includes first information, and the first information indicates whether the ranging frame includes a channel impulse response training sequence CTS.

Optionally, the ranging control information includes second information, and the second information indicates delay time between a clock synchronization moment and a first slot in a ranging round.

Optionally, the ranging control information includes third information, the third information indicates the second device to feed back a ranging measurement value, or feed back a ranging measurement value and a positioning result that is of the second device and that is obtained based on the ranging measurement value, and the ranging measurement value includes information obtained based on exchange of the ranging frame.

Optionally, the information obtained based on exchange of the ranging frame includes a time difference between a receiving moment of the ranging frame and a sending moment of acknowledgment of the ranging frame, or a time difference between a sending moment of the ranging frame and a receiving moment of acknowledgment of the ranging frame.

Optionally, the information obtained based on exchange of the ranging frame includes an angle of arrival of the second device relative to the first device.

Optionally, the third information indicates the second device to feed back the ranging measurement value and the positioning result, the ranging control information further includes fourth information, and the fourth information indicates that the positioning result is a location of the second device relative to the first device, or a positioning result in an absolute coordinate system.

Optionally, the first transceiver unit 411 is further configured to send or receive a measurement result through the first channel, and the measurement result is determined based on the ranging frame.

Optionally, the measurement result includes at least one of fifth information, sixth information, and seventh information. The fifth information indicates whether the measurement result includes an address of a basepoint device, and the basepoint device is in a communication system in which the first device is included; the sixth information indicates a quantity N of positioning results included in the measurement result, and N is a positive integer; and the seventh information indicates the positioning result.

Optionally, the measurement result includes at least one of eighth information and ninth information. The eighth information indicates whether the measurement result includes a confidence of reply time, and the reply time is the time difference between the receiving moment of the ranging frame and the sending moment of acknowledgment of the ranging frame. The ninth information indicates whether the measurement result includes a confidence of round-trip time, and the round-trip time is the time difference between the sending moment of the ranging frame and the receiving moment of acknowledgment of the ranging frame.

Optionally, the bandwidth of the second channel is 499.2 MHz.

Optionally, the second channel is an operating channel of the UWB.

Optionally, the first channel is an operating channel of Bluetooth, Wi-Fi, NB-IoT, or NFC.

It should be understood that the foregoing content is merely used an example for understanding. The apparatus 400 can further implement other steps, actions, or methods related to the receiver in the method embodiments. Details are not described herein.

FIG. 12 is a block diagram of a communication device 500 according to an embodiment of this application. As shown in FIG. 12, the communication device 500 includes at least one processor 510 and a transceiver 520. The processor 510 is coupled to a memory, and is configured to execute instructions stored in the memory, to control the transceiver 520 to send a signal and/or receive a signal. Optionally, the communication device 500 further includes a memory 530, configured to store instructions.

It should be understood that the processor 510 and the memory 530 may be integrated into one processing apparatus. The processor 510 is configured to execute program code stored in the memory 530, to implement the foregoing functions. During specific implementation, the memory 530 may alternatively be integrated into the processor 510, or may be independent of the processor 510.

It should be further understood that the transceiver 520 may include a receiver (which is also referred to as a receiver machine) and a transmitter (which is also referred to as a transmitter machine). The transceiver 520 may further include an antenna. There may be one or more antennas. The transceiver 1020 may be a communication interface or an interface circuit.

When the communication device 500 is a chip, the chip includes a transceiver unit and a processing unit. The transceiver unit may be an input/output circuit or a communication interface. The processing unit may be a processor, a microprocessor, or an integrated circuit that is integrated on the chip. An embodiment of this application further provides a processing apparatus, including a processor and an interface. The processor may be configured to perform the methods in the foregoing method embodiments.

It should be understood that the processing apparatus may be a chip. For example, the processing apparatus may be a field programmable gate array (field programmable gate array, FPGA), an application-specific integrated circuit (application specific integrated circuit, ASIC), a system on chip (system on chip, SoC), a central processing unit (central processing unit, CPU), a network processor (network processor, NP), a digital signal processing circuit (digital signal processor, DSP), a micro controller unit (micro controller unit, MCU), a programmable controller (programmable logic device, PLD), or another integrated chip.

During implementation, the steps of the foregoing method may be completed by using a hardware integrated logic circuit in the processor or instructions in the form of software. The steps of the methods disclosed with reference to embodiments of this application may be directly performed and completed by a hardware processor, or may be performed and completed by using a combination of hardware and software modules in the processor. The software module may be located in a mature storage medium in the art, for example, a random access memory, a flash memory, a read-only memory, a programmable read-only memory, an electrically erasable programmable memory, or a register. The storage medium is located in the memory. The processor reads information in the memory and completes the steps in the foregoing methods in combination with hardware of the processor. To avoid repetition, details are not described herein again.

An embodiment of this application further provides a computer-readable storage medium. The computer-readable storage medium stores computer instructions used to implement the method performed by the first device or the second device in the foregoing method embodiments.

An embodiment of this application further provides a computer program product including instructions. When the instructions are executed by a computer, the computer is enabled to implement the method performed by the first device or the second device in the foregoing method embodiments.

This application further provides a system, including the foregoing first device and/or second device.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer instructions are loaded and executed on a computer, the procedures or functions according to embodiments of this application are all or partially generated. The computer may be a generalpurpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center that integrates one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid state disk (solid state disk, SSD)), or the like.

In embodiments of this application, the word "example" or "for example" is used to represent giving an example, an illustration, or a description. Any embodiment or design scheme described as an "example" in this application should not be explained as being more preferred or having more advantages than another embodiment or design scheme. Exactly, the term "example" is used to present a concept in a specific manner.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments in any appropriate manner.

It should be understood that sequence numbers of the foregoing processes do not mean execution sequences in embodiments of this application. The execution sequences of the processes should be determined based on functions and internal logic of the processes, and should not constitute any limitation on implementation processes of embodiments of this application. Names of all nodes and messages in this application are merely names set for ease of description in this application, and may be different in an actual network. It should not be understood that names of various nodes and messages are limited in this application. On the contrary, any name that has a function that is the same as or similar to that of the node or the message used in this application is considered as a method or an equivalent replacement in this application, and falls within the protection scope of this application.

It should be further understood that, in this application, "when" and "if" mean that UE or a base station performs corresponding processing in an objective situation, but do not constitute any limitation on time, do not require the UE or the base station to perform a determining action during implementation, and do not mean other limitations either.

It should be noted that, in embodiments of this application, "presetting", "preconfiguring", or the like may be implemented by prestoring corresponding code or a table in a device (for example, a terminal device), or in another manner that may indicate related information. A specific implementation of "presetting", "preconfiguring", or the like is not limited in this application, for example, a preset rule or a preset constant in embodiments of this application.

In addition, the terms "system" and "network" may be used interchangeably in this specification. The term "and/or" in this specification describes only an association relationship between associated objects and indicates that three relationships may exist. For example, A and/or B may represent the following three cases: Only A exists, both A and B exist, and only B exists.

The term "at least one of..." in this specification represents all or any combination of the listed items. For example, "at least one of A, B, and C" may represent the following six cases: Only A exists, only B exists, only C exists, both A and B exist, both B and C exist, and A, B, and C all exist. In this specification, "at least one" means one or more. "A plurality of" means two or more.

It should be understood that in embodiments of this application, "B corresponding to A" indicates that B is associated with A, and B may be determined based on A. However, it should be further understood that determining B based on A does not mean that B is determined based only on A. B may alternatively be determined based on A and/or other information. The terms "comprise", "include", "have", and other variants thereof all mean "include but is not limited to", unless otherwise specifically emphasized in another manner.

It should be understood that, in various embodiments of this application, first, second, and various numbers are merely used for distinguishing for ease of description, and are not used to limit the scope of embodiments of this application. For example, different information is distinguished.

A person of ordinary skill in the art may be aware that, in combination with the examples described in embodiments disclosed in this specification, units and algorithm steps may be implemented by electronic hardware or a combination of computer software and electronic hardware. Whether the functions are performed by using hardware or software depends on particular applications and design constraints of the technical solutions. A person skilled in the art may use different methods to implement the described functions for each particular application, but it should not be considered that the implementation goes beyond the scope of this application.

A person skilled in the art may clearly understand that, for the purpose of convenient and brief description, for detailed working processes of the foregoing system, apparatus, and unit, refer to corresponding processes in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate parts may be or may not be physically separate, and parts displayed as units may or may not be physical units, that is, may be located in one position, or may be distributed on a plurality of network units. A part or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

Further embodiments of the present invention are provided in the following. It should be noted that the numbering used in the following section does not necessarily need to comply with the numbering used in the previous sections.

Embodiment 1. A ranging method, comprising:

sending, by a first device, ranging control information to a second device through a first channel, wherein the ranging control information is used to configure a ranging frame; and

receiving and/or sending, by the first device, the ranging frame through a second channel, wherein a bandwidth of the second channel is greater than a bandwidth of the first channel.

Embodiment 2. The method according to embodiment 1, wherein the ranging control information comprises at least one of the following:

first information, wherein the first information indicates whether the ranging frame comprises a channel impulse response training sequence CTS;

second information, wherein the second information indicates delay time between a clock synchronization moment and a first slot in a ranging round; and

third information, wherein the third information indicates the second device to feed back a ranging measurement value, or feed back a ranging measurement value and a positioning result that is of the second device and that is obtained based on the ranging measurement value, and the ranging measurement value comprises information obtained based on exchange of the ranging frame.

Embodiment 3. The method according to embodiment 2, wherein the ranging control information comprises the third information, and the information obtained based on exchange of the ranging frame comprises a time difference between a receiving moment of the ranging frame and a sending moment of acknowledgment of the ranging frame, or a time difference between a sending moment of the ranging frame and a receiving moment of acknowledgment of the ranging frame.

Embodiment 4. The method according to embodiment 2 or 3, wherein the ranging control information comprises the third information, and the information obtained based on exchange of the ranging frame comprises an angle of arrival of the second device relative to the first device.

Embodiment 5. The method according to any one of embodiments 2 to 4, wherein the ranging control information comprises the third information, the third information indicates the second device to feed back the ranging measurement value and the positioning result, the ranging control information further comprises fourth information, and the fourth information indicates that the positioning result is a location of the second device relative to the first device, or a positioning result in an absolute coordinate system.

Embodiment 6. The method according to any one of embodiments 1 to 5, wherein the method further comprises: receiving or sending, by the first device, a measurement result through the first channel, wherein the measurement result is determined based on the ranging frame.

Embodiment 7. The method according to embodiment 6, wherein the measurement result comprises at least one of the following:

fifth information, wherein the fifth information indicates whether the measurement result comprises an address of a basepoint device, and the basepoint device is in a communication system in which the first device is comprised;

sixth information, wherein the sixth information indicates a quantity N of positioning results comprised in the measurement result, and N is a positive integer;

seventh information, wherein the seventh information indicates the positioning result;

eighth information, wherein the eighth information indicates whether the measurement result comprises a confidence of reply time, and the reply time is the time difference between the receiving moment of the ranging frame and the sending moment of acknowledgment of the ranging frame; and

ninth information, wherein the ninth information indicates whether the measurement result comprises a confidence of round-trip time, and the round-trip time is the time difference between the sending moment of the ranging frame and the receiving moment of acknowledgment of the ranging frame.

Embodiment 8. A ranging method, comprising:

receiving, by a second device, ranging control information through a first channel, wherein the ranging control information is used to configure a ranging frame; and

sending or receiving, by the second device, the ranging frame through a second channel, wherein a bandwidth of the second channel is greater than a bandwidth of the first channel.

Embodiment 9. The method according to embodiment 8, wherein the ranging control information comprises at least one of the following:

first information, wherein the first information indicates whether the ranging frame comprises a channel impulse response training sequence CTS;

second information, wherein the second information indicates delay time between a clock synchronization moment and a first slot in a ranging round; and

third information, wherein the third information indicates the second device to feed back a ranging measurement value, or feed back a ranging measurement value and a positioning result that is of the second device and that is obtained based on the ranging measurement value, and the ranging measurement value comprises information obtained based on exchange of the ranging frame.

Embodiment 10. The method according to embodiment 9, wherein the ranging control information comprises the third information, and the information obtained based on exchange of the ranging frame comprises a time difference between a receiving moment of the ranging frame and a sending moment of acknowledgment of the ranging frame, or a time difference between a sending moment of the ranging frame and a receiving moment of acknowledgment of the ranging frame.

Embodiment 11. The method according to embodiment 9 or 10, wherein the ranging control information comprises the third information, and the information obtained based on exchange of the ranging frame comprises an angle of arrival of the second device relative to a first device.

Embodiment 12. The method according to any one of embodiments 9 to 11, wherein the ranging control information comprises the third information, the third information indicates the second device to feed back the ranging measurement value and the positioning result, the ranging control information further comprises fourth information, and the fourth information indicates that the positioning result is a location of the second device relative to the first device, or a positioning result in an absolute coordinate system.

Embodiment 13. The method according to any one of embodiments 8 to 12, wherein the method further comprises: sending or receiving, by the second device, a measurement result through the first channel, wherein the measurement result is determined based on the ranging frame.

Embodiment 14. The method according to embodiment 13, wherein the measurement result comprises at least one of the following:

fifth information, wherein the fifth information indicates whether the measurement result comprises an address of a basepoint device, and the basepoint device is in a communication system in which the first device is comprised;

sixth information, wherein the sixth information indicates a quantity N of positioning results comprised in the measurement result, and N is a positive integer;

seventh information, wherein the seventh information indicates the positioning result;

eighth information, wherein the eighth information indicates whether the measurement result comprises a confidence of reply time, and the reply time is the time difference between the receiving moment of the ranging frame and the sending moment of acknowledgment of the ranging frame; and

ninth information, wherein the ninth information indicates whether the measurement result comprises a confidence of round-trip time, and the round-trip time is the time difference between the sending moment of the ranging frame and the receiving moment of acknowledgment of the ranging frame.

Embodiment 15. A ranging apparatus, comprising:

a first transceiver, configured to send ranging control information to a second device through a first channel, wherein the ranging control information is used to configure a ranging frame; and

a second transceiver, configured to receive or send the ranging frame through a second channel, wherein a bandwidth of the second channel is greater than a bandwidth of the first channel.

Embodiment 16. The apparatus according to embodiment 15, wherein the first transceiver is further configured to receive or send a measurement result through the first channel, and the measurement result is determined based on the ranging frame.

Embodiment 17. A ranging apparatus, comprising:

a third transceiver, configured to receive ranging control information through a first channel, wherein the ranging control information is used to configure a ranging frame; and

a fourth transceiver, configured to send or receive the ranging frame through a second channel, wherein a bandwidth of the second channel is greater than a bandwidth of the first channel.

Embodiment 18. The apparatus according to embodiment 17, wherein the third transceiver is further configured to send or receive a measurement result through the first channel, and the measurement result is determined based on the ranging frame.

Embodiment 19. A computer-readable storage medium, comprising a computer program, wherein when the computer program is run on a computer, the computer is enabled to perform the method according to any one of embodiments 1 to 7 or 8 to 14.

Embodiment 20. A computer program product, wherein when the computer program product runs on a computer, the computer is enabled to perform the method according to any one of embodiments 1 to 7 or 8 to 14.

Embodiment 21. A chip system, comprising a processor, configured to invoke a computer program from a memory and run the computer program, so that a communication device on which the chip system is installed performs the method according to any one of embodiments 1 to 7 or 8 to 14.

Embodiment 22. A communication system, comprising an apparatus configured to perform the method according to any one of embodiments 1 to 7 and an apparatus configured to perform the method according to any one of embodiments 8 to 14.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1.  A ranging method, comprising:

    sending, by a first device, ranging control information to a second device through a first channel, wherein the ranging control information is used to configure a ranging frame; and
    receiving and/or sending, by the first device, the ranging frame through a second channel, wherein a bandwidth of the second channel is greater than a bandwidth of the first channel;
    wherein the ranging control information comprises at least one of the following:
    second information, wherein the second information indicates delay time between a clock synchronization moment and a first slot in a ranging round.

2.  The method according to claim 1, wherein the ranging control information comprises the third information, and the information obtained based on exchange of the ranging frame comprises a time difference between a receiving moment of the ranging frame and a sending moment of acknowledgment of the ranging frame, or a time difference between a sending moment of the ranging frame and a receiving moment of acknowledgment of the ranging frame.

3.  The method according to claim 1 or 2, wherein the ranging control information comprises a third information, and the information obtained based on exchange of the ranging frame comprises an angle of arrival of the second device relative to the first device.

4.  The method according to any one of claims 1 to 3, wherein the ranging control information comprises the third information, the third information indicates the second device to feed back the ranging measurement value and the positioning result, the ranging control information further comprises fourth information, and the fourth information indicates that the positioning result is a location of the second device relative to the first device, or a positioning result in an absolute coordinate system.

5.  The method according to any one of claims 1 to 4, wherein the method further comprises:
    receiving or sending, by the first device, a measurement result through the first channel, wherein the measurement result is determined based on the ranging frame.

6.  The method according to claim 5, wherein the measurement result comprises at least one of the following:

    fifth information, wherein the fifth information indicates whether the measurement result comprises an address of a basepoint device, and the basepoint device is in a communication system in which the first device is comprised;
    sixth information, wherein the sixth information indicates a quantity N of positioning results comprised in the measurement result, and N is a positive integer;
    seventh information, wherein the seventh information indicates the positioning result;

eighth information, wherein the eighth information indicates whether the measurement result comprises a confidence of reply time, and the reply time is the time difference between the receiving moment of the ranging frame and the sending moment of acknowledgment of the ranging frame; and

ninth information, wherein the ninth information indicates whether the measurement result comprises a confidence of round-trip time, and the round-trip time is the time difference between the sending moment of the ranging frame and the receiving moment of acknowledgment of the ranging frame.

7. A ranging method, comprising:

receiving, by a second device, ranging control information through a first channel, wherein the ranging control information is used to configure a ranging frame; and
sending or receiving, by the second device, the ranging frame through a second channel, wherein a bandwidth of the second channel is greater than a bandwidth of the first channel;
wherein the ranging control information comprises at least one of the following:
second information, wherein the second information indicates delay time between a clock synchronization moment and a first slot in a ranging round.

8. The method according to claim 7, wherein the ranging control information comprises the third information, and the information obtained based on exchange of the ranging frame comprises a time difference between a receiving moment of the ranging frame and a sending moment of acknowledgment of the ranging frame, or a time difference between a sending moment of the ranging frame and a receiving moment of acknowledgment of the ranging frame.

9. The method according to claim 7 or 8, wherein the ranging control information comprises the third information, and the information obtained based on exchange of the ranging frame comprises an angle of arrival of the second device relative to a first device.

10. The method according to any one of claims 7 to 9, wherein the ranging control information comprises the third information, the third information indicates the second device to feed back the ranging measurement value and the positioning result, the ranging control information further comprises fourth information, and the fourth information indicates that the positioning result is a location of the second device relative to the first device, or a positioning result in an absolute coordinate system.

11. The method according to any one of claims 7 to 10, wherein the method further comprises:
sending or receiving, by the second device, a measurement result through the first channel, wherein the measurement result is determined based on the ranging frame.

12. The method according to claim 11, wherein the measurement result comprises at least one of the following:

fifth information, wherein the fifth information indicates whether the measurement result comprises an address of a basepoint device, and the basepoint device is in a communication system in which the first device is comprised;
sixth information, wherein the sixth information indicates a quantity N of positioning results comprised in the measurement result, and N is a positive integer;
seventh information, wherein the seventh information indicates the positioning result;
eighth information, wherein the eighth information indicates whether the measurement result comprises a confidence of reply time, and the reply time is the time difference between the receiving moment of the ranging frame and the sending moment of acknowledgment of the ranging frame; and
ninth information, wherein the ninth information indicates whether the measurement result comprises a confidence of round-trip time, and the round-trip time is the time difference between the sending moment of the ranging frame and the receiving moment of acknowledgment of the ranging frame.

13. A computer-readable storage medium, comprising a computer program, wherein when the computer program is run on a computer, the computer is enabled to perform the method according to any one of claims 1 to 6 or 7 to 12.

14. A computer program product, wherein when the computer program product runs on a computer, the computer is enabled to perform the method according to any one of claims 1 to 6 or 7 to 12.

15. A chip system, comprising a processor, configured to invoke a computer program from a memory and run the computer program, so that a communication device on which the chip system is installed performs the method according to any one of claims 1 to 6 or 7 to 12.

101

PAN
coordinator

(A)

● FFD

○ RFD

←→ Communication flow

102

PAN
coordinator

(B)

FIG. 1

| Device 1 | | |
|---|---|---|
| First module | | |
| MAC | PHY | RF |
| MAC | PHY | RF |
| Second module | | |

First
channel

Second
channel

| Device 2 | | |
|---|---|---|
| First module | | |
| RF | PHY | MAC |
| RF | PHY | MAC |
| Second module | | |

FIG. 2

FIG. 3

<u>200</u>

```
┌──────────────┐                           ┌───────────────┐
│ First device │                           │ Second device │
└──────────────┘                           └───────────────┘
        │                                           │
        │    S210: Ranging control information      │
        │──────────────────────────────────────────▶│
        │              (first channel)              │
        │                                           │
        │         S220: Ranging frame               │
        │◀──────────────────────────────────────────│
        │              (second channel)             │
        │                                           │
        │         S230: Measurement result          │
        │◀ ─ ─ ─ ─ ─ ─ ─ ─ ─ ─ ─ ─ ─ ─ ─ ─ ─ ─ ─ ─ ▶│
        │              (first channel)              │
        │                                           │
```

FIG. 4

Bit 0 and 1 2 and 3 4 and 5 6 to 11 12 to 15 16 and 17 18 to 21 22 to 31 Byte 1 0 or 1 0 or 1 0 or 2 0 or 6 0 or 4

| MNM | RRU | CPC | VRN | FSTD | CH | PRF | Reserved | Content control | Ranging block duration | Ranging round duration | Ranging slot duration | Controller address | Session identifier |
|------|------|------|------|------|------|------|------|------|------|------|------|------|------|

Bit 0 1 2 3 4 5 to 7

| Ranging block duration present | Ranging round duration present | Ranging slot duration present | Controller address present | Session identifier present | Reserved |
|------|------|------|------|------|------|

FIG. 5

| Slot₁ | Slot₂ | ... | Slotₙ | Slot₁ | Slot₂ | ... | Slotₙ | ... | Slot₁ | Slot₂ | ... | Slotₙ |

Ranging slot duration

Ranging round duration

Ranging block duration

FIG. 6

| Bit | 0 | 1 | 2 | 3 | 4 | 5 | 6 | 7 | Byte 6 | 6 |
|-----|-----|-----|------|------|-----|----------|-----|-----|-----|-----|
| | ROP | RTT | RRTT | RAOA | CT | Reserved | RAP | PAP | RA | PA |

FIG. 7

Bit     0 to 5     6 and 7    Byte   7×ACLN

| ACLN | Reserved | ACL |
|------|----------|-----|

Bit       0         1 to 7     Byte     6

| Role | Slot index | Address | ... |
|------|-----------|---------|-----|

**FIG. 8**

Bit       0         1 to 7     Byte     15×RCLN

| BDAP | RCLN | RCL |
|------|------|-----|

Byte     3         3         3        0 or 6

| X-axis distance | Y-axis distance | Z-axis distance | Basepoint device address | ... |
|-----------------|-----------------|-----------------|--------------------------|-----|

**FIG. 9**

Bit 0    1    2    3    4    5    6    7    8    9 to 15 Byte  24×RCLN

| RTP | RTFP | RTTP | RTTFP | AAP | AAFP | AEP | AEFP | Reserved | RCLN | RCL |
|-----|------|------|-------|-----|------|-----|------|----------|------|-----|

Byte  0 or 4      0 or 1      0 or 4      0 or 1      0 or 2      0 or 1      0 or 2      0 or 1      6

| Reply time | Confidence of the reply time | Round-trip time | Confidence of the round-trip time | AOA elevation | Confidence of the AOA elevation | AOA azimuth | Confidence of the AOA elevation | Address |
|------------|------------------------------|-----------------|-----------------------------------|---------------|---------------------------------|-------------|---------------------------------|---------|

FIG. 10

EP 4 765 969 A2

Apparatus 400

Transceiver unit 410

First transceiver unit 411

Second transceiver unit 412

First processing unit 421

Second processing unit 422

Processing unit 420

FIG. 11

Communication device 500

Processor 510

Memory 530

Transceiver 520

FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210315062

- CN 202210759159